# EUROPEAN PATENT APPLICATION

(11) **EP 4 378 291 A1**
(43) Date of publication of application: **05.06.2024**
(21) Application number: 22848920.9
(22) Date of filing: 22.03.2022
(51) Int. Cl.: A01B 69/00, G05D 1/02, G06Q 50/02

(54) **AGRICULTURAL ASSISTANCE SYSTEM AND AGRICULTURAL ASSISTANCE METHOD**

(30) Priority: 30.07.2021 JP 2021125843
(71) Applicant: Kubota Corporation, Osaka 556-8601 (JP)
(72) Inventor: KUBOTA, Yuki, Sakai-shi, Osaka 590-0823 (JP); TAMBO, Toru, Sakai-shi, Osaka 590-0823 (JP); OKUBO, Itsuki, Sakai-shi, Osaka 590-0823 (JP); OTA, Kazuki, Sakai-shi, Osaka 590-0823 (JP)
(74) Representative: Global IP Europe Patentanwaltskanzlei
(86) International application number: PCT/JP2022/013221
(87) International publication number: WO 2023/007836

(57) **Abstract**

An agricultural assistance system assists with agricultural work by one or more agricultural machines. The agricultural assistance system includes a controller to control an operation of the one or more agricultural machines. In response to receiving from a terminal apparatus a signal requesting assistance in agricultural work for a field, the controller causes the one or more agricultural machines to move to the field to assist in the agricultural work for the field.

## Description

### TECHNICAL FIELD

The present disclosure relates to agricultural assistance systems and agricultural assistance methods.

### BACKGROUND ART

Research and development has been directed to the automation of work vehicles such as tractors to be used in fields. For example, work vehicles which travel via automatic steering by utilizing a positioning system, e.g., a GNSS (Global Navigation Satellite System) that is capable of precise positioning, have come into practical use. Work vehicles which automatically perform not only automatic steering but also speed control have also come into practical use.

Patent Documents 1 and 2 each disclose a technique for achieving efficiency in agricultural work through cooperation of a plurality of work vehicles.

### CITATION LIST

### PATENT LITERATURE

[Patent Document 1] Japanese Laid-Open Patent Publication No. 2020-108407
[Patent Document 2] Japanese Laid-Open Patent Publication No. 2017-12134

### SUMMARY OF INVENTION

### TECHNICAL PROBLEM

According to the techniques disclosed in Patent Documents 1 and 2, as a plurality of work vehicles cooperate to perform work in a field, the work can be efficiently carried out. However, even in this case, the work progress may lag behind the task schedule, assistance in agricultural work may be necessary.

The present disclosure provides a technique for facilitating assistance with the agricultural work of an agricultural machine for a field.

### SOLUTION TO PROBLEM

The present specification discloses solutions as recited in the following Items.

### [Item 1]

An agricultural assistance system to assist with agricultural work with one or more agricultural machines,
the agricultural assistance system comprising a controller to control an operation of the one or more agricultural machines, wherein,
in response to receiving from a terminal apparatus a signal requesting assistance in agricultural work for a field, the controller causes the one or more agricultural machines to move to the field to assist in the agricultural work for the field.

### [Item 2]

The agricultural assistance system of Item 1, wherein the controller
controls an operation of a first agricultural machine among the one or more agricultural machines, and,
while a second agricultural machine is performing agricultural work in the field, in response to receiving the signal from the terminal apparatus, causes the first agricultural machine to move to the field to assist in the agricultural work performed by the second agricultural machine.

### [Item 3]

The agricultural assistance system of Item 1, wherein the controller
controls an operation of each of a first agricultural machine and a second agricultural machine among the one or more agricultural machines, and,
in response to receiving the signal from the terminal apparatus, causes the first agricultural machine and the second agricultural machine to move to the field to assist in the agricultural work for the field.

### [Item 4]

The agricultural assistance system of Item 2, wherein, in response to receiving the signal from the terminal apparatus, the controller causes the first agricultural machine being stopped in a storage location to move to the field, and after the agricultural work for the field is finished, causes the first agricultural machine to move to the storage location.

### [Item 5]

The agricultural assistance system of Item 2, wherein, in response to receiving the signal from the terminal apparatus, the controller causes the first agricultural machine being stopped in a first storage location to move to the field, and after the agricultural work for the field is finished, causes the first agricultural machine to move to a second storage location that is distinct from the first storage location.

### [Item 6]

The agricultural assistance system of Item 5, wherein, in response to receiving the signal from the terminal apparatus, the controller causes the first agricultural machine being stopped in the first storage location to move to the field, and after the agricultural work for the field is finished, causes the first agricultural machine to move to the second storage location being at a shorter distance from the field than a distance from the field to the first storage location.

### [Item 7]

The agricultural assistance system of Item 2, wherein the controller
controls an operation of a third agricultural machine among the one or more agricultural machines; and
the controller causes the first or third agricultural machine to move to the field based on a relative positioning, at a time when the signal is received from the terminal apparatus, between: a place where the first agricultural machine is located; a place where the third agricultural machine is located; and the field.

### [Item 8]

The agricultural assistance system of Item 7, wherein, when the first agricultural machine is stopped in a first storage location and the third agricultural machine is stopped in a second storage location that is located at a distance from the field that is greater than a distance from the field to the first storage location, in response to receiving the signal from the terminal apparatus, the controller causes the first agricultural machine to move from the first storage location to the field.

### [Item 9]

The agricultural assistance system of Item 7, wherein when the third agricultural machine is stopped in a first storage location and the first agricultural machine is performing agricultural work in another field that is located at a distance from the field that is less than a distance from the field to the first storage location, in response to receiving the signal from the terminal apparatus, the controller causes the first agricultural machine to move from the other field to the field.

### [Item 10]

The agricultural assistance system of Item 7, wherein, when the first agricultural machine is performing agricultural work in another field that is distinct from the field and the third agricultural machine is performing agricultural work in still another field that is located at a distance from the field that is greater than a distance from the field to the other field, in response to receiving the signal from the terminal apparatus, the controller causes the first agricultural machine to move from the other field to the field.

### [Item 11]

The agricultural assistance system of any of Items 1 to 10, comprising a storage device, wherein,
the controller generates a work log including at least one piece of information among contents of work, a task time, and a type of agricultural machine for the agricultural work performed by the one or more agricultural machines in the field, and records the work log in the storage device.

### [Item 12]

The agricultural assistance system of Item 11, wherein the controller transmits data of the work log to the terminal apparatus.

### [Item 13]

The agricultural assistance system of Item 11 or 12, wherein the controller calculates a rent for the one or more agricultural machines based on the work log, and transmits billing information to the terminal apparatus.

### [Item 14]

The agricultural assistance system of any of Items 1 to 13, wherein the controller manages a schedule of agricultural work to be performed by the one or more agricultural machines.

### [Item 15]

The agricultural assistance system of Item 14, wherein, when the controller determines that the one or more agricultural machines are to move to the field in response to receiving the signal from the terminal apparatus, the controller updates a schedule of agricultural work to be performed by the one or more agricultural machines.

### [Item 16]

An agricultural assistance system to assist with agricultural work with an agricultural machine,
the agricultural assistance system comprising a controller to control an operation of each of a first agricultural machine and a second agricultural machine, wherein
the controller
manages a schedule of agricultural work to be performed by the second agricultural machine, and,
while the second agricultural machine is performing agricultural work for the field, if it is determined that the agricultural work by the second agricultural machine is behind the schedule, causes the first agricultural machine to move to the field to assist in the agricultural work performed by the second agricultural machine.

### [Item 17]

A computer-implemented agricultural assistance method to assist with agricultural work with one or more agricultural machines, the agricultural assistance method causing a computer to execute:
controlling an operation of the one or more agricultural machines;
receiving a signal requesting assistance in agricultural work for a field that is transmitted from a terminal apparatus; and,
when receiving the signal, causing the one or more agricultural machines to move to the field to assist in the agricultural work for the field.

### [Item 18]

A computer-implemented agricultural assistance method to assist with agricultural work with an agricultural machine, the agricultural assistance method causing a computer to execute:
controlling an operation of each of a first agricultural machine and a second agricultural machine;
managing a schedule of agricultural work to be performed by the second agricultural machine; and
while the second agricultural machine is performing agricultural work for the field, if it is determined that the agricultural work by the second agricultural machine is behind the schedule, causing the first agricultural machine to move to the field to assist in the agricultural work performed by the second agricultural machine.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be provided within a single apparatus, or divided over two or more separate apparatuses.

### ADVANTAGEOUS EFFECTS OF INVENTION

According to embodiments of the present disclosure, it is possible to facilitate assistance in the agricultural work of an agricultural machine for a field.

### BRIEF DESCRIPTION OF DRAWINGS

[FIG. **1**] A diagram schematically showing an example configuration of an agricultural assistance system according to an illustrative embodiment of the present disclosure.
[FIG. **2**] A block diagram illustrating a schematic hardware configuration of a server computer.
[FIG. **3**] A block diagram illustrating a schematic hardware configuration of a terminal apparatus.
[FIG. **4**] A perspective view showing an example appearance of an agricultural machine according to an illustrative embodiment of the present disclosure.
[FIG. **5**] A side view schematically showing an example of an agricultural machine having an implement attached thereto.
[FIG. **6**] A block diagram showing an example schematic configuration of an agricultural machine.
[FIG. **7**] A conceptual diagram showing an example agricultural machine which performs positioning based on an RTK-GNSS.
[FIG. **8**] A diagram schematically showing an example of an agricultural machine automatically traveling along a target path in a field.
[FIG. **9**] A flowchart showing an example operation of steering control to be performed by a controller during self-driving.
[FIG. **10A**] A diagram showing an example of an agricultural machine that travels along a target path.
[FIG. **10B**] A diagram showing an example of an agricultural machine at a position which is shifted rightward from the target path.
[FIG. **10C**] A diagram showing an example of an agricultural machine at a position which is shifted leftward from the target path.
[FIG. **10D**] A diagram showing an example of an agricultural machine which is oriented in an inclined direction with respect to the target path.
[FIG. **11**] A diagram schematically showing an example situation where a plurality of agricultural machines are self-traveling inside a field and on a road outside the field.
[FIG. **12**] A diagram showing an example of a setting screen for a task schedule that is displayed on a display device of the terminal apparatus.
[FIG. **13**] A diagram showing an example of a schedule of agricultural tasks to be generated by the server.
[FIG. **14**] A flowchart showing a procedure of an example agricultural assistance method according to an illustrative embodiment of the present disclosure.
[FIG. **15A**] A diagram for describing an overview of assistance in agricultural work for a field by an agricultural machine.
[FIG. **15B**] A diagram for describing an overview of assistance in agricultural work for a field by an agricultural machine.
[FIG. **16**] A diagram for describing example operations of a controller of a first agricultural machine, a controller of a second agricultural machine, and a controller of the server.
[FIG. **17**] A diagram illustrating a state where an administrator who is in the neighborhood of a field is using the terminal apparatus to manage the progress of work in the field that is performed by the second agricultural machine.
[FIG. **18**] A diagram showing an example indication of progress of work to be displayed on a display of the terminal apparatus.
[FIG. **19**] A diagram showing an example indication of a statement of usage to be displayed on the terminal apparatus after an agricultural work assistance service is used.
[FIG. **20**] A diagram showing example operations of the controller of the first agricultural machine, the controller of the second agricultural machine, the terminal apparatus and the controller of the server where, in the case where assistance in the work of an agricultural machine is requested from the terminal apparatus being used by a user.
[FIG. **21**] A diagram illustrating a state where an agricultural worker is performing manual work in the field while carrying the terminal apparatus.
[FIG. **22**] A diagram showing example operations of the controller of the first agricultural machine, the terminal apparatus and the controller of the server in a case where the worker requests assistance in work by using the terminal apparatus.
[FIG. **23**] A diagram illustrating a state in which the administrator being in the neighborhood of the field is using the terminal apparatus to manage the progress of work in the field performed by the second agricultural machine and in which the administrator is receiving assistance in the agricultural work by one or more agricultural machines.
[FIG. **24A**] A diagram for describing an example where, after agricultural work for the field is finished, the first agricultural machine is moved to a storage location that is distinct from the storage location in which the first agricultural machine was stopped.
[FIG. **24B**] A diagram for describing an example where, after agricultural work for the field is finished, the first agricultural machine is moved to a storage location that is distinct from the storage location in which the first agricultural machine was stopped.
[FIG. **25**] A diagram showing another example where, after agricultural work for the field is finished, the first agricultural machine is moved to a storage location that is distinct from the storage location in which the first agricultural machine was stopped.
[FIG. **26**] A diagram for describing an example where, in a case where the first storage location is closer to the field than is the second storage location, the agricultural machine at the first storage location is moved to the field.
[FIG. **27**] A diagram for describing an example where, in a case where another field is closer to the field than is the storage location, an agricultural machine performing agricultural work in the other field is moved to the field.
[FIG. **28**] A diagram for describing an example where, in a case where another field is closer to the field than is the storage location, an agricultural machine performing agricultural work in the other field is moved to the field.
[FIG. **29**] A diagram for describing an example where, in a case where another field is closer to the field than is still another field, an agricultural machine performing agricultural work in the other field is moved to the field.

### DESCRIPTION OF EMBODIMENTS

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the techniques according to the present disclosure are not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

In the present disclosure, an "agricultural machine" means a machine for agricultural applications. Examples of agricultural machines include tractors, harvesters, rice transplanters, vehicles for crop management, vegetable transplanters, mowers, seeders, spreaders, and mobile robots for use in fields. Not only may a work vehicle (such as a tractor) function as an "agricultural machine" alone by itself, but also an implement that is attached to or towed by a work vehicle may together in combination with the work vehicle function as an "agricultural machine". For the ground surface within a field, an agricultural machine performs agricultural work such as tilling, seeding, preventive pest control, manure spreading, planting of crops, or harvesting. Such agricultural work or tasks may be referred to simply as "work" or "tasks".

In the present disclosure, "self-driving" means controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work may also be controlled automatically. In the case where the agricultural machine is a vehicle-type machine, traveling of the agricultural machine via self-driving will be referred to as "self-traveling". The controller may control at least one of: steering that is required in the movement of the agricultural machine; adjustment of the moving speed; and beginning and ending a move. In the case of controlling a work vehicle having an implement attached thereto, the controller may control operations such as raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also have the function of moving partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion or an entirety of the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel within the field or outside the fields (e.g., on roads) in an unmanned manner. During an autonomous move, operations of detecting and avoiding obstacles may be performed.

An agricultural assistance system according to an embodiment of the present disclosure is, in effect, realized as a computer system. The agricultural assistance system includes a controller to control an operation of one or more agricultural machines. By using the agricultural assistance system, the user is able to enjoy an agricultural work assistance service. Examples of agricultural work assistance services include agricultural machine sharing services. In response to receiving from a terminal apparatus a signal requesting assistance in agricultural work for a field, the controller causes the one or more agricultural machines to move to the field to assist in the agricultural work for the field. In the following description, a signal requesting assistance in agricultural work may be referred to as a "request signal".

The controller may be a computer that includes one or more processors and one or more memories, for example. In that case, the processor may consecutively execute a computer program that is stored in the memory(s) to achieve a desired process. The controller may be mounted on the agricultural machine, or disposed at a place that is remote from the agricultural machine, e.g., at the home or the office of a user who monitors the agricultural machine or a management center that manages the agricultural machine. One of multiple electronic control units (ECU) that is mounted on the agricultural machine may function as the controller, or an ECU that is mounted on one of a plurality of agricultural machines may be designated as a master computer to function as the controller. Alternatively, an external server computer or an edge computer that communicates with the agricultural machine via a network may function as the controller. Furthermore, a terminal apparatus may function as the controller. Examples of terminal apparatuses include stationary type computers, smartphones, tablet computers, laptop computers, or the like.

A controller according to an aspect of the present disclosure controls an operation of a first agricultural machine among the one or more agricultural machines, and, while a second agricultural machine is performing agricultural work in a field, in response to receiving a request signal from a terminal apparatus that is used by the user, causes the first agricultural machine to move to the field to assist in the agricultural work performed by the second agricultural machine. Alternatively, the controller may control an operation of each of a first agricultural machine and a second agricultural machine among the one or more agricultural machines, and, in response to receiving a request signal from a terminal apparatus that is used by the user, cause the first agricultural machine and the second agricultural machine to move to the field to assist in the agricultural work for the field.

When an agricultural worker performs manual work in a field, or manually manipulates an agricultural machine to perform agricultural work, the progress of work may lag behind the initially-conceived task schedule. Even in the case where an agricultural machine performs agricultural work through unmanned self-driving in accordance with a task schedule that was made by an agricultural worker, the progress of work may lag behind the initially-conceived task schedule because of various factors, e.g., the field state, changing weather, deteriorations in the parts of the agricultural machine, or deteriorations of an implement. For example, tasks such as rice planting or harvesting need to be performed in an intensive manner over a short period of time, and delays in the task schedule are more likely to occur as the area of the field increases. Conventionally, when a delay in the task schedule occurs, for example, an administrator who manages the entirety of agricultural work (e.g., a farm owner) can communicate with one or more workers to request the worker(s) for assistance in the agricultural work. The requested worker(s) can assist in the agricultural work via manual work, or with an agricultural machine that the administrator possesses. However, assistance in the agricultural work may be requested to no more than the workers who are hired by the administrator, etc. Furthermore, because an agricultural machine is in the possession of an individual such as the administrator, when others wish to use that agricultural machine, permission needs to be obtained through negotiations, etc.

According to an embodiment of the present disclosure, even if a delay in a task schedule occurs, assistance in the agricultural work can be received from an agricultural machine(s) to facilitate recovery from the lag. For example, a plurality of agricultural machines each belonging to a different owner may be connected to the agricultural assistance system, whereby sharing of an agricultural machine between different groups can be realized, etc. This allows an agricultural worker belonging to one group to request an agricultural machine belonging to another group to provide assistance in the agricultural work. However, requests for assistance from the user are not limited to the case where a delay in the task schedule has occurred. The user may arbitrarily make a request for assistance in agricultural work, e.g., in order to accelerate the agricultural work to expedite the task schedule.

According to another aspect of the present disclosure, while an agricultural worker is performing manual work in the field, in response to receiving a request signal from a terminal apparatus that is used by the agricultural worker, the controller may cause an agricultural machine to move to the field to assist in the manual work by the agricultural worker. In this example, too, recovery from the lag is facilitated by assistance in agricultural work by the agricultural machine.

According to still another aspect of the present disclosure, the controller controls the operation of each of the first agricultural machine and the second agricultural machine. The controller manages a schedule of agricultural work to be performed by the second agricultural machine, and, while the second agricultural machine is performing agricultural work for the field, if it is determined that the agricultural work by the second agricultural machine is behind the schedule, causes the first agricultural machine to move to the field to assist in the agricultural work performed by the second agricultural machine. According to this example, a technique for fully automating assistance in agricultural work for the field by a self-driving agricultural machine may be provided.

### [1. configuration of agricultural assistance system]

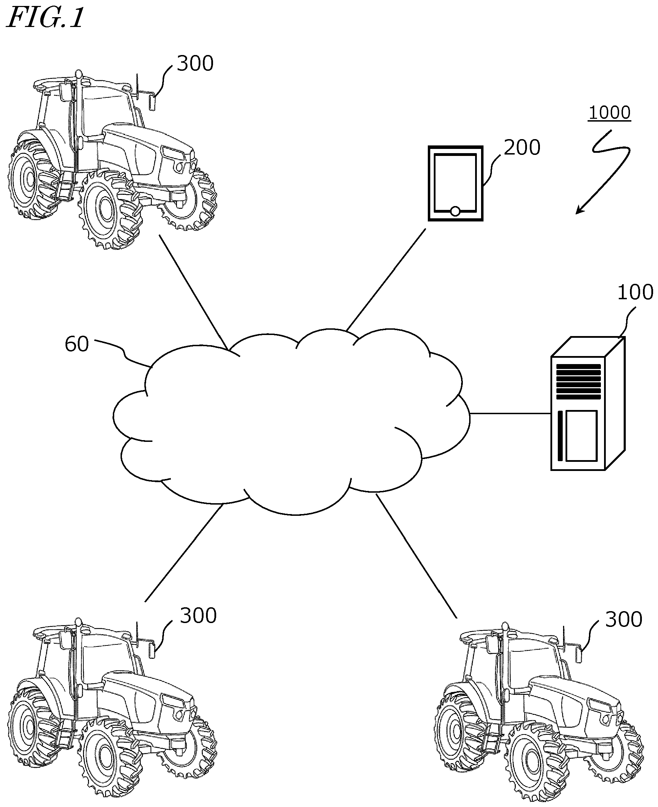

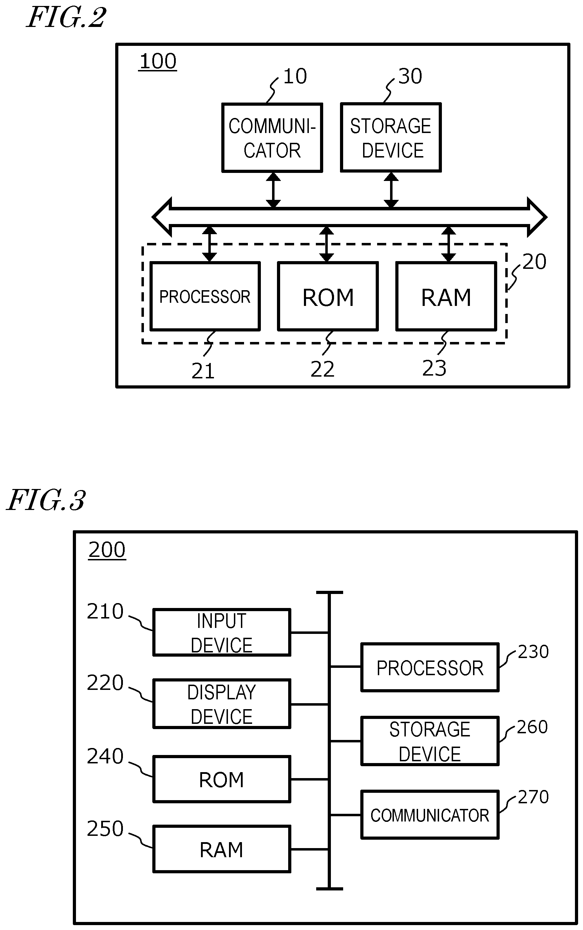

FIG. **1** is a diagram schematically showing an example configuration of an agricultural assistance system **1000** according to the present embodiment. FIG. **2** is a block diagram illustrating a schematic hardware configuration of a server computer **100.** The agricultural assistance system **1000** includes a server computer **100** (hereinafter denoted as the "server **100**") and one or more terminal apparatuses **200.** Via a wired or wireless network **60,** the plurality of agricultural machines **300** may be connected to the agricultural assistance system **1000** in such a manner that they are capable of communicating with one another. FIG. **1** shows an example connection where three agricultural machines **300** are connected to the agricultural assistance system **1000** via the network **60.** However, any number of agricultural machines **300** may be connected to the agricultural assistance system **1000.** From the standpoint of reducing communication delays and dispersing the network load, the agricultural assistance system **1000** may further include one or more edge computers. In the present embodiment, a portion of the server **100** functions as a controller.

To the agricultural assistance system **1000,** for example, a plurality of agricultural machines that are possessed by an administrator may be connected. Alternatively, a plurality of agricultural machines each belonging to a different administrator may be connected to the agricultural assistance system **1000.**

### (server 100)

The server **100** may be a computer that is disposed at a remote place from the agricultural machine **300.** The server **100** includes a communicator **10,** a controller **20,** and a storage device **30.** These component elements are connected to one another via a bus so as to be capable of communicating with another. The server **100** can function as a cloud server that processes request signals, manages a schedule of agricultural tasks to be performed by agricultural machines **300,** and assists in agriculture by using data that is stored in a storage.

The communicator **10** is a communication module for communicating with the terminal apparatus **200** and the agricultural machines **300** via the network **60.** For example, the communicator **10** is able to perform wired communications compliant with communication standards such as IEEE1394 (registered trademark) or Ethernet (registered trademark). For example, the communicator **10** is able to perform wireless communications compliant with the Bluetooth (registered trademark) standards or the Wi-Fi standards, or 3G, 4G, 5G or other cellular mobile communications.

The controller **20** includes a processor **21,** a ROM (Read Only Memory) **22,** a RAM (Random Access Memory) **23,** and the like, for example. Software (or firmware) for the processor **21** to perform at least one process may be implemented in the ROM **22.** Such software may be recorded on a computer-readable storage medium, e.g., an optical disc, and marketed as packaged software, or provided to the user via the network **60.**

The processor **21** is a semiconductor integrated circuit, and includes a central processing unit (CPU). The processor **21** may be realized as a microprocessor or microcontroller. The processor **21** consecutively executes a computer program stored in the ROM **22,** in which instructions for executing at least one process are described, to realize desired processes.

In addition to or instead of the processor **21** the controller **20** may include an FPGA (Field Programmable Gate Array), a GPU (Graphics Processing Unit), an ASIC (Application Specific Integrated Circuit), an ASSP (Application Specific Standard Product) having a CPU mounted therein, or a combination of two or more circuits selected from among such circuits.

The ROM **22** is a writable memory (e.g., a PROM), a rewritable memory (e.g., a flash memory), or a read-only memory, for example. The ROM **22** stores a program for controlling the operation of the processor **21.** The ROM **22** may not be a single storage medium, but may be a set of storage media. A portion of the set of storage media may be removable memory.

The RAM **23** provides a work area into which the control program stored in the ROM **22** will be temporarily laid out during boot-up. The RAM **23** may not necessarily be a single storage medium, and may be a set of storage media.

The storage device **30** mainly functions as a storage for databases. An example of the storage device **30** is a cloud storage. The storage device **30** may be a magnetic storage device or a semiconductor storage device, for example. An example of a magnetic storage device is a hard disk drive (HDD). An example of a semiconductor storage device is a solid state drive (SSD). However, the storage device **30** may be an external storage device that is connected to the server **100** via the network **60.**

### (terminal apparatus 200)

FIG. **3** is a block diagram illustrating a schematic hardware configuration of the terminal apparatus **200.**

The terminal apparatus 200 includes an input device **210,** a display device **220,** a processor **230,** a ROM **240,** a RAM **250,** a storage device **260,** and a communicator **270.** These component elements are connected to one another via a bus so as to be capable of communicating with another.

The input device **210** is a device that converts instructions from the user into data and inputs it to a computer. Examples of the input device **210** are a keyboard, a mouse, and a touchscreen panel. Examples of the display device **220** are a liquid crystal display and an organic EL display. The description of each of the processor **230,** the ROM **240,** the RAM **250,** the storage device **260,** and the communicator **270** has already been given in the hardware configuration example of the server **100,** and is omitted.

### [2. example configuration of agricultural machine]

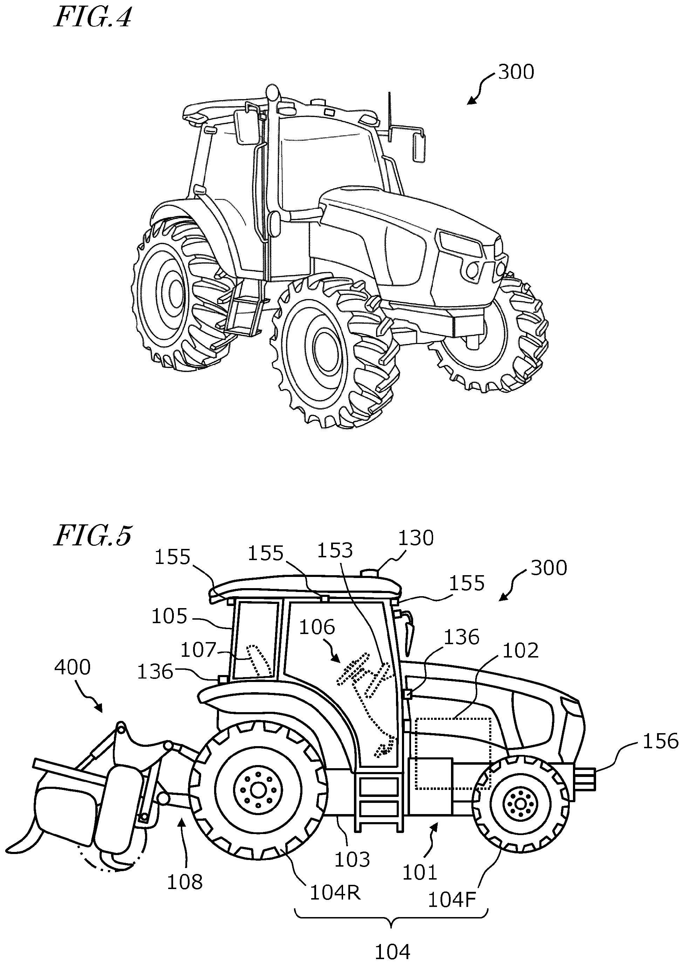

FIG. **4** is a perspective view showing an example appearance of the agricultural machine **300** according to the present embodiment. FIG. **5** is a side view schematically showing an example of the agricultural machine **300** having an implement **400** attached thereto. The agricultural machine **300** according to the present embodiment is an agricultural tractor (work vehicle) having the implement **400** attached thereto. The agricultural machine **300** is not limited to a tractor, and may not have the implement **400** attached thereto.

As shown in FIG. **5****,** the agricultural machine **300** includes a vehicle body **101,** a prime mover (engine) **102,** and a transmission **103.** On the vehicle body **101,** tires (wheels) **104** and a cabin **105** are provided. The tires **104** include a pair of front wheels **104F** and a pair of rear wheels **104R.** Inside the cabin **105,** a driver's seat **107,** a steering device **106,** an operational terminal **153,** and switches for manipulation are provided. In the case where the agricultural machine **300** does not travel on public roads, either pair of the front wheels **104F** or the rear wheels **104R** may be crawlers, rather than tires.

The agricultural machine **300** shown in FIG. **5** further includes a plurality of cameras **155.** The cameras **155** may be provided at the front/rear/right/left of the agricultural machine **300,** for example. The cameras **155** capture images of the surrounding environment of the agricultural machine **300,** and generate image data. The images acquired by the cameras **155** may be transmitted to the terminal apparatus **200** which is responsible for remote monitoring. The images may be used to monitor the agricultural machine **300** during unmanned driving. The cameras **155** may also be used in order to generate images for recognizing white lines, signs, indications, or obstacles in the surroundings when the agricultural machine **300** travels on a road.

The agricultural machine **300** further includes the positioning device **130.** The positioning device **130** includes a GNSS receiver. The GNSS receiver includes an antenna to receive a signal(s) from a GNSS satellite(s) and a processing circuit to determine the position of the agricultural machine **300** based on the signal(s) received by the antenna. The positioning device **130** receive a GNSS signal(s) transmitted from a GNSS satellite (s), and performs positioning on the basis of the GNSS signal(s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** in the present preferred embodiment is disposed above the cabin **105,** it may be disposed at any other position.

The positioning device **130** may include an inertial measurement unit (IMU). It is possible to complement the position data by using a signal from the IMU. The IMU can measure tilts and minute motions of the agricultural machine **300.** By complementing the position data based on satellite signals using the data acquired by the IMU, the positioning performance can be improved.

The agricultural machine **300** illustrated in FIG. **5** further includes an LiDAR sensor **156.** The LiDAR sensor **156** in this example is The LiDAR sensor **156** in this example is disposed at a lower portion of the front surface of the vehicle body **101.** The LiDAR sensor **156** may alternatively be disposed at other positions. While the agricultural machine **300** is moving, the LiDAR sensor **156** repetitively outputs sensor data representing the distances and directions of measurement points on objects existing in the surrounding environment, or two-dimensional or three-dimensional coordinate values of such measurement points. The sensor data which is output from the LiDAR sensor **156** is processed by the controller of the agricultural machine **300.** By utilizing SLAM (Simultaneous Localization and Mapping) or other algorithms, for example, the controller is able to perform processes such as generating an environment map based on the sensor data. The generation of an environment map may be performed by a computer, e.g., the server **100,** that is external to the agricultural machine **300.** The sensor data that is output from the LiDAR sensor **156** may also be utilized for obstacle detection.

The positioning device **130** may utilize the data acquired by the cameras **155** or the LiDAR sensor **156** for positioning. When objects serving as characteristic points exist in the environment that is traveled by the agricultural machine **300,** the position of the agricultural machine **300** can be estimated with a high accuracy based on data that is acquired with the cameras **155** or the LiDAR sensor **156** and an environment map that is previously recorded in the storage device. By correcting or complementing position data based on the satellite signal(s) using the data acquired by the cameras **155** or the LiDAR sensor **156,** it becomes possible to identify the position of the agricultural machine **300** with a higher accuracy.

The agricultural machine **300** further includes a plurality of obstacle sensors **136.** In the example shown in FIG. **5****,** the obstacle sensors **136** are provided at the front and the rear of the cabin **105.** The obstacle sensors **136** may be used to detect obstacles in the surroundings during self-traveling to come to a halt or detour around it.

The prime mover **102** may be a diesel engine, for example. Instead of a diesel engine, an electric motor may be used. The transmission **103** can change the propulsion and the moving speed of the agricultural machine **300** through a speed changing mechanism. The transmission **103** can also switch between forward travel and backward travel of the agricultural machine **300.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the agricultural machine **300.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of a controller disposed in the agricultural machine **300,** the steering angle may be automatically adjusted by the power of the hydraulic device or electric motor.

A linkage device **108** is provided at the rear of the vehicle body **101.** The linkage device **108** may include, e.g., a three-point linkage (also referred to as a "three-point link" or a "three-point hitch"), a PTO (Power Take Off) shaft, a universal joint, and a communication cable. The linkage device **108** allows the implement **400** to be attached to or detached from the agricultural machine **300.** While towing the implement **400,** the agricultural machine **300** allows the implement **400** to perform a predetermined task. The linkage device **108** may be provided frontward of the vehicle body **101.** In that case, the implement may be connected frontward of the agricultural machine **300.**

Although the agricultural machine **300** illustrated in FIG. **5** is a rotary tiller, the implement **400** is not limited to a rotary tiller. For example, any arbitrary implement such as a seeder, a spreader, a transplanter, a mower, a harvester, a sprayer, or a harrow, may be connected to the agricultural machine **300** for use.

The agricultural machine **300** illustrated in FIG. **5** is capable of human driving; alternatively, it may only support unmanned driving. In that case, component elements which are only required for human driving, e.g., the cabin **105,** the steering device **106,** and the driver's seat **107** do not need to be provided in the agricultural machine **300.** An unmanned agricultural machine **300** may travel via autonomous driving, or by remote manipulation by a user.

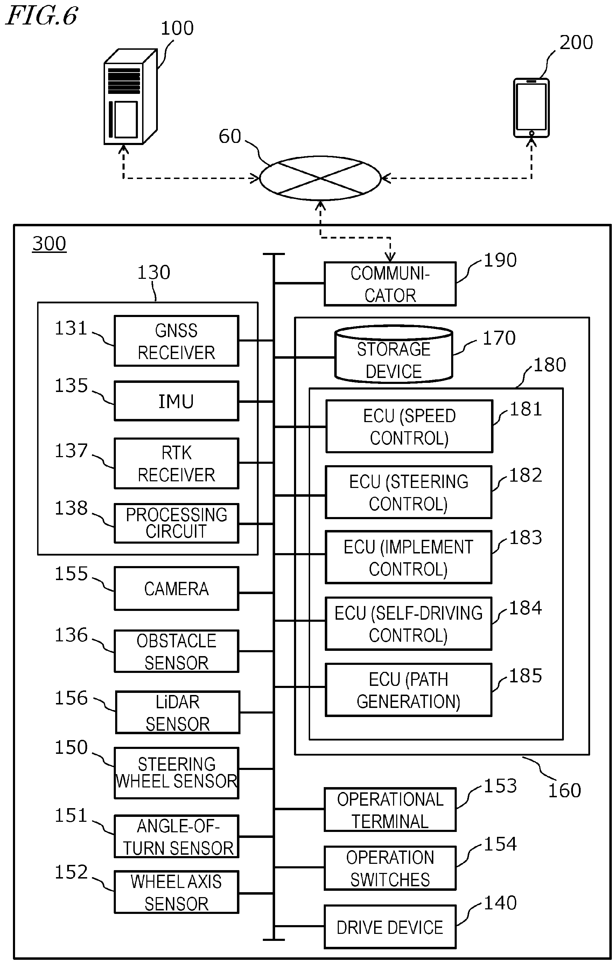

FIG. **6** is a block diagram showing an example schematic configuration of the agricultural machine **300.** The agricultural machine **300** and the implement **400** can communicate with each other via a communication cable that is included in the linkage device **108.**

In addition to the cameras **155,** the positioning device **130,** the obstacle sensors **136,** and the operational terminal **153,** the agricultural machine **300** in the example of FIG. **6** includes a drive device **140,** steering wheel sensor **150,** an angle-of-turn sensor **151,** a wheel axis sensor **152,** operation switches **154,** a control system **160,** and a communicator **190.**

The positioning device **130** includes a GNSS receiver **131,** and an inertial measurement unit **135.** The control system **160** includes a storage device **170** and a controller **180.** The controller **180** includes a plurality of electronic control units **181** to **185.** Note that FIG. **6** shows component elements which are relatively closely related to the operations of self-driving by the agricultural machine **300,** while other component elements are omitted from illustration.

The GNSS receiver 131 in the positioning device **130** receive satellite signals which are transmitted from multiple GNSS satellites, and generate GNSS data based on the satellite signals. The GNSS data may be generated in a predetermined format, such as the NMEA-0183 format, for example. The GNSS data may include values representing the identification number, angle of elevation, azimuth angle, and reception intensity of each satellite from which a satellite signal was received, for example.

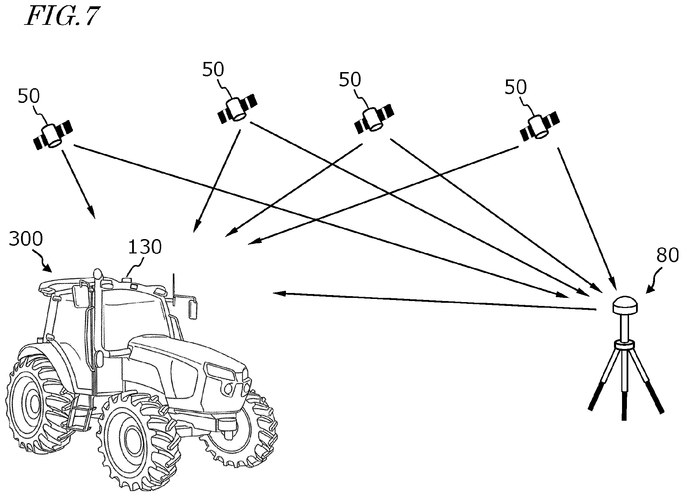

The positioning device **130** shown in FIG. **6** performs positioning of the agricultural machine **300** by utilizing an RTK (Real Time Kinematic)-GNSS. FIG. **7** is a conceptual diagram showing an example of the agricultural machine **300** which performs positioning based on an RTK-GNSS. In the positioning based on an RTK-GNSS, not only satellite signals transmitted from multiple GNSS satellites **50,** but also a correction signal that is transmitted from a reference station **80** is used. The reference station **80** may be disposed near the field that is traveled by the agricultural machine **300** (e.g., at a position within 1 km of the agricultural machine **300**). The reference station **80** generates a correction signal of, e.g., an RTCM format based on the satellite signals received from the multiple GNSS satellites **50,** and transmits the correction signal to the positioning device **130.** The RTK receiver **137,** which includes an antenna and a modem, receives the correction signal transmitted from the reference station **80.** Based on the correction signal, the processing circuit **138** of the positioning device **130** corrects the result of positioning by the GNSS receiver **131.** Use of an RTK-GNSS enables positioning with an accuracy on the order of several cm of errors, for example. Positional information (including latitude, longitude, and altitude information) is acquired through the highly accurate positioning by an RTK-GNSS. The positioning device **130** may calculate the position of the agricultural machine **300** as frequently as, e.g., one to ten times per second.

Note that the positioning method is not limited to an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **80,** positional information may be generated without using the correction signal. In that case, the positioning device **130** may lack the RTK receiver **137.**

The positioning device **130** in the present preferred embodiment further includes an IMU **135.** The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and attitude of the agricultural machine **300.** Based not only on the GNSS signals and the correction signal but also on a signal that is output from the IMU **135,** the positioning device **130** can estimate the position and orientation of the agricultural machine **300** with a higher accuracy. The signal that is output from the IMU **135** may be used for the correction or complementation of the position that is calculated based on the satellite signals and the correction signal. The IMU **135** outputs a signal more frequently than does the GNSS receiver **131.** Utilizing this highly frequent signal, the processing circuit **138** can measure the position and orientation of the agricultural machine **300** more frequently (e.g., about 10 Hz or above). Instead of the IMU **135,** a 3-axis accelerometer and a 3-axis gyroscope may be separately provided. The IMU **135** may be provided as a separate device from the positioning device **130.**

In the example of FIG. **6****,** the processing circuit **138** calculates the position of the agricultural machine **300** based on signals which are output from the GNSS receiver **131,** the RTK receiver **137,** and the IMU **135.** Furthermore, the processing circuit **138** may estimate or correct the position of the agricultural machine **300** based on data that is acquired by the cameras **155** or the LiDAR sensor **156.** By using the data acquired by the cameras **155** or the LiDAR sensor **156,** the accuracy of positioning can be further enhanced.

The positional calculation may instead be performed by any device other than the positioning device **130.** For example, the controller **180** or an external computer may acquire output data from the each receiver and each sensor as is required for positioning, and estimate the position of the agricultural machine **300** based on such data.

The cameras **155** are imagers that image the surrounding environment of the agricultural machine **300.** Each camera **155** may include an image sensor such as a CCD (Charge Coupled Device) or a CMOS (Complementary Metal Oxide Semiconductor), for example. In addition, each camera **155** may include an optical system including one or more lenses and a signal processing circuit. During travel of the agricultural machine **300,** the cameras **155** image the surrounding environment of the agricultural machine **300,** and generate image (e.g., motion picture) data. The cameras **155** are able to capture motion pictures at a frame rate of 3 frames/second (fps: frames per second) or greater, for example. The images generated by the cameras **155** may be used when a remote supervisor checks the surrounding environment of the agricultural machine **300** with the terminal apparatus **200,** for example. The images generated by the cameras **155** may also be used for the purpose of positioning or obstacle detection. As shown in FIG. **5****,** a plurality of cameras **155** may be provided at different positions on the agricultural machine **300,** or a single camera may be provided. A visible camera(s) for generating visible images and an infrared camera(s) for generating infrared images may be separately provided. Both of a visible camera (s) and an infrared camera(s) may be provided as cameras for generating images for monitoring purposes. Infrared cameras may also be used for obstacle detection at nighttime.

The obstacle sensors **136** detect objects around the agricultural machine **300.** Each obstacle sensor **136** may include a laser scanner or an ultrasonic sonar, for example. When an object exists at a position closer to the obstacle sensor **136** than a predetermined distance, the obstacle sensor **136** outputs a signal indicating the presence of an obstacle. A plurality of obstacle sensors **136** may be provided at different positions of the agricultural machine **300.** For example, a plurality of laser scanners and a plurality of ultrasonic sonars may be disposed at different positions of the agricultural machine **300.** Providing a multitude of obstacle sensors **136** can reduce blind spots in monitoring obstacles around the agricultural machine **300.**

The drive device **140** includes various devices that are needed for the traveling of the agricultural machine **300** and the driving of the implement **400,** e.g., the aforementioned prime mover **102** and transmission **103,** a differential including a locking differential mechanism, the steering device **106,** and the linkage device **108,** for example. The prime mover **102** may include an internal combustion engine such as a diesel engine. Instead of an internal combustion engine or in addition to an internal combustion engine, the drive device **140** may include an electric motor that is dedicated to traction purposes.

The steering wheel sensor **150** measures the angle of rotation of the steering wheel of the agricultural machine **300.** The angle-of-turn sensor **151** measures the angle of turn of the front wheels **104F,** which are the wheels responsible for steering. Measurement values by the steering wheel sensor **150** and the angle-of-turn sensor **151** are used for steering control by the controller **180.**

The wheel axis sensor **152** measures the rotational speed, i.e., the number of revolutions per unit time, of a wheel axis that is connected to a tire **104.** The wheel axis sensor **152** may be a sensor utilizing a magnetoresistive element (MR), a Hall generator, or an electromagnetic pickup, for example. The wheel axis sensor **152** may output a numerical value indicating the number of revolutions per minute (unit: rpm) of the wheel axis, for example. The wheel axis sensor **152** is used to measure the speed of the agricultural machine **300.**

The storage device **170** includes one or more storage media such as a flash memory or a magnetic disc. The storage device **170** stores various data that is generated by the sensors and by the controller **180.** In the storage device **170,** an environment map including the inside of the field and any public roads outside the field and information of target paths are previously recorded. In the case where one or more of a plurality of ECUs included in the controller **180** function(s) as the controller **20** according to the present embodiment, a schedule of agricultural tasks to be performed by the agricultural machine **300,** data of a work log, billing information, and the like may be stored in the storage device **170,** for example.

The controller **180** includes a plurality of ECUs. The plurality of ECUs may include, for example, an ECU **181** for speed control, an ECU **182** for steering control, an ECU **183** for implement control, an ECU **184** for self-driving control, and an ECU **185** for path generation, for example. The ECU **181** controls the prime mover **102,** the transmission **103,** and the brakes included in the drive device **140,** thus controlling the speed of the agricultural machine **300.** The ECU **182** controls the hydraulic device or electric motor included in the steering device **106** based on a measurement value of the steering wheel sensor **150,** thus controlling the steering of the agricultural machine **300.** In order to cause the implement **400** to perform a desired operation, the ECU **183** controls the operation of the three-point link, the PTO shaft, etc., that are included in the linkage device **108.** Also, the ECU **183** generates a signal to control the operation of the implement **400,** and transmits this signal from the communication device **190** to the implement **400.** Based on signals which are output from the positioning device **130,** the steering wheel sensor **150,** the angle-of-turn sensor **151,** and the wheel axis sensor **152,** the ECU **184** performs computation and control for achieving self-driving. During self-driving, the ECU **184** sends a speed command value to the ECU **181,** and sends a steering angle command value to the ECU **182.** In response to the speed command value, the ECU **181** controls the prime mover **102,** the transmission **103,** or the brakes to change the speed of the agricultural machine **300.** In response to the steering angle command value, the ECU **182** controls the steering device **106** to change the steering angle. The ECU **185** controls communications of the communicator **190** with other devices. For example, the ECU **185** generates a target path for the agricultural machine **300,** and records it to the storage device **170.**

When the controller **20** of the server **100,** upon receiving a request for assistance in agricultural work, determines that an agricultural machine **300** stopped in a storage location, for example, is to assist in the agricultural work for the field, the ECU **185** may receive the positional information of the field needing assistance that is transmitted from the controller **20,** and generate a target path from the current point to the field needing assistance based on the received positional information, for example.

Through the action of these ECUs, the controller **180** achieves self-driving, determination of a target path, and communications with other devices. During self-driving, the controller **180** controls the drive device **140** based on the position of the agricultural machine **300** as measured or estimated by the positioning device **130** and the target path stored in the storage device **170.** As a result, the controller **180** causes the agricultural machine **300** to travel along the target path.

The plurality of ECUs included in the controller **180** may communicate with one another according to a vehicle bus standard such as CAN (Controller Area Network). Although the ECUs **181** to **185** are illustrated as individual corresponding blocks in FIG. **6****,** each of these functions may be implemented by a plurality of ECUs. Alternatively, an onboard computer that integrates the functions of at least some of the ECUs **181** to **185** may be provided. The controller **180** may include ECUs other than the ECUs **181** to **185,** and any number of ECUs may be provided in accordance with functionality. For example, the controller **180** may further include an ECU to be used for managing access of the agricultural machine **300** to a field. Each ECU includes a control circuit including one or more processors.

The communication device **190** is a circuit that performs communications with the communication IF of the implement **400.** The communication device **190** includes circuitry to perform exchanges of signals complying with an ISOBUS standard such as ISOBUS-TIM, for example, between itself and the communication IF of the implement **400.** This causes the implement **400** to perform a desired operation, or allows information to be acquired from the implement **400.**

The operational terminal **153** is a terminal for the user to perform a manipulation related to the traveling of the agricultural machine **300** and the operation of the implement **400,** and may also be referred to as a virtual terminal (VT). The operational terminal **153** may include a display device such as a touch screen panel, and/or one or more buttons. The display device may be a display such as a liquid crystal or an organic light-emitting diode (OLED), for example. By manipulating the operational terminal **153,** the user can perform various manipulations, such as switching ON/OFF the self-driving mode, recording or editing an environment map, setting a target path, and switching ON/OFF the implement **400.** At least some of these manipulations can also be realized by manipulating the operation switches **154.** The operational terminal **153** may be configured so as to be detachable from the agricultural machine **300.** A user who is remote from the agricultural machine **300** may manipulate the detached operational terminal **153** to control the operation of the agricultural machine **300.** Instead of the operational terminal **153,** the user may manipulate a computer on which necessary application software is installed, e.g., the terminal apparatus **200,** to control the operation of the agricultural machine **300.** The operational terminal **153** can also be used as a terminal apparatus to transmit a request signal to the server **100.**

### [3. self-traveling operation]

First, an example operation of self-traveling by the agricultural machine **300** will be described.

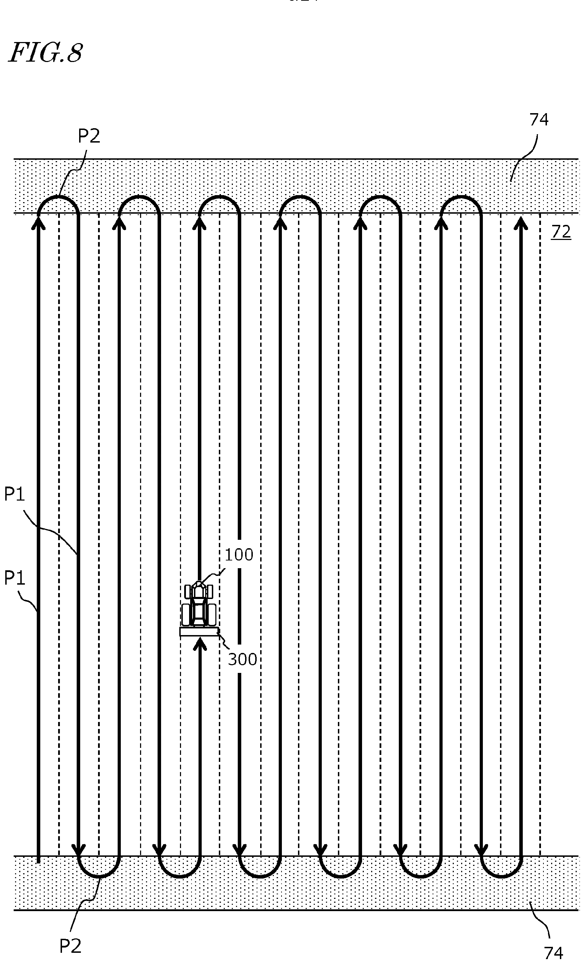

FIG. **8** is a diagram schematically showing an example of an agricultural machine **300** automatically traveling along a target path in a field. In this example, the field includes a work area **72** in which the agricultural machine **300** performs a task by using the implement **400,** and headlands **74** that are located near the outer edge of the field. The user may designate which regions on the map of the field would correspond to the work area **72** and the headlands **74** in advance. The target path in this example includes a plurality of parallel main paths **P1** and a plurality of turning paths **P2** interconnecting the plurality of main paths **P1.** The main paths **P1** are located in the work area **72,** whereas the turning paths **P2** are located in the headlands **74.** Although each main path **P1** in FIG. **8** is illustrated as a linear path, each main path **P1** may also include a curved portion(s). Broken lines in FIG. **8** depict the working breadth of the implement **400.** The working breadth is previously set and recorded in the storage device **170.** The working breadth may be set and recorded as the user manipulates the operational terminal **153.** Alternatively, the working breadth may be automatically recognized and recorded when the implement **400** is connected to the agricultural machine **300.** The interval between the plurality of main paths **P1** may be matched to the working breadth. The target path may be generated based on the user's manipulation, before self-driving is begun. The target path may be generated so as to cover the entire work area **72** in the field, for example. Along the target path shown in FIG. **8****,** the agricultural machine **300** automatically travels while reciprocating, from a beginning point of work to an ending point of work. Note that the target path shown in FIG. **8** is only an example, and the target path may be arbitrarily determined.

Next, an example control by the controller **180** during self-driving will be described.

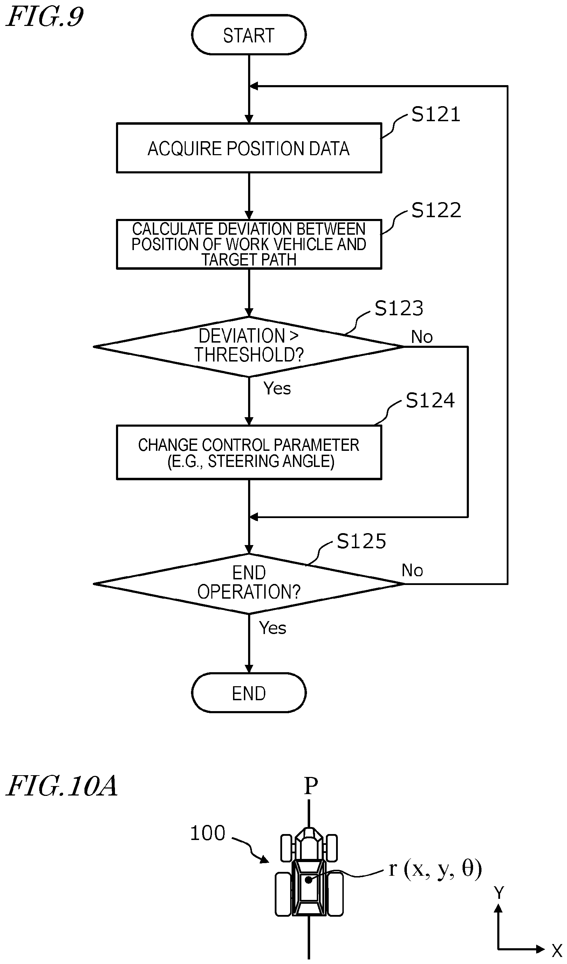

FIG. **9** is a flowchart showing an example operation of steering control to be performed by the controller **180** during self-driving. During travel of the agricultural machine **300,** the controller **180** performs automatic steering by performing the operation from steps **S121** to **S125** shown in FIG. **9****.** The speed will be maintained at a previously-set speed, for example. First, during travel of the agricultural machine **300,** the controller **180** acquires data representing the position of the agricultural machine **300** that is generated by the positioning device **130** (step **S121**). Next, the controller **180** calculates a deviation between the position of the agricultural machine **300** and the target path (step **S122**). The deviation represents the distance between the position of the agricultural machine **300** and the target path at that moment. The controller **180** determines whether the calculated deviation in position exceeds the previously-set threshold or not (step **S123**). If the deviation exceeds the threshold, the controller **180** changes a control parameter of the steering device included in the drive device **140** so as to reduce the deviation, thus changing the steering angle (step **S124**). If the deviation does not exceed the threshold at step **S123,** the operation of step **S124** is omitted. At the following step **S125,** the controller **180** determines whether a command to end operation has been received or not. The command to end operation may be given when the user has instructed that self-driving be suspended through remote manipulations, or when the agricultural machine **300** has arrived at the destination, for example. If the command to end operation has not been issued, the control returns to step **S121** and performs a similar operation based on a newly measured position of the agricultural machine **300.** The controller **180** repeats the operation from steps **S121** to **S125** until a command to end operation is given. The aforementioned operation is executed by the ECUs **182** and **184** in the controller **180.**

In the example shown in FIG. **9****,** the controller **180** controls the drive device **140** based only on a deviation between the position of the agricultural machine **300** as identified by the positioning device **130** and the target path. However, a deviation in terms of directions may further be considered in the control. For example, when a directional deviation exceeds a previously-set threshold, where the directional deviation is an angle difference between the orientation of the agricultural machine **300** as identified by the positioning device **130** and the direction of the target path, the controller **180** may change the control parameter (e.g., steering angle) of the steering device of the drive device **140** in accordance with the deviation.

Hereinafter, with reference to FIGS. **10A** to **10D****,** an example of steering control by the controller **180** will be described more specifically.

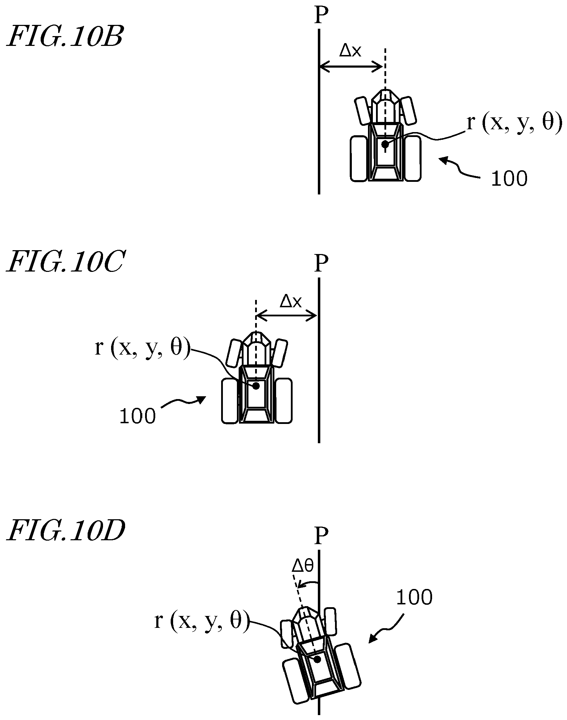

FIG. **10A** is a diagram showing an example of an agricultural machine **300** that travels along a target path **P.** FIG. **10B** is a diagram showing an example of an agricultural machine **300** at a position which is shifted rightward from the target path **P.** FIG. **10C** is a diagram showing an example of an agricultural machine **300** at a position which is shifted leftward from the target path **P.** FIG. **10D** is a diagram showing an example of an agricultural machine **300** which is oriented in an inclined direction with respect to the target path **P.** In these figures, the pose, i.e., the position and orientation, of the agricultural machine **300** as measured by the positioning device **130** is expressed as r(x,y,θ) . Herein, (x,y) are coordinates representing the position of a reference point on the agricultural machine **300,** in an XY coordinate system which is a two-dimensional coordinate system being fixed to the globe. In the examples shown in FIGS. **10A** to **10D****,** the reference point on the agricultural machine **300** is at a position on the cabin where a GNSS antenna is disposed, but the reference point may be at any arbitrary position. θ is an angle representing the measured orientation of the agricultural machine **300.** Although the target path **P** is shown parallel to the Y axis in the examples illustrated in these figures, generally speaking, the target path **P** may not necessarily be parallel to the Y axis.

As shown in FIG. **10A****,** in the case where the position and orientation of the agricultural machine **300** are not deviated from the target path **P,** the controller **180** maintains the steering angle and speed of the agricultural machine **300** without changing them.

As shown in FIG. **10B****,** when the position of the agricultural machine **300** is shifted rightward from the target path **P,** the controller **180** changes the steering angle so that the traveling direction of the agricultural machine **300** will be inclined leftward, thus bringing the agricultural machine **300** closer to the path **P.** Herein, not only the steering angle but also the speed may be changed. The magnitude of the steering angle may be adjusted in accordance with the magnitude of a positional deviation Δx, for example.

As shown in FIG. **10C****,** when the position of the agricultural machine **300** is shifted leftward from the target path **P,** the controller **180** changes the steering angle so that the traveling direction of the agricultural machine **300** will be inclined rightward, thus bringing the agricultural machine **300** closer to the path **P.** In this case, too, not only the steering angle but also the speed may be changed. The amount of change of the steering angle may be adjusted in accordance with the magnitude of the positional deviation Δx, for example.

As shown in FIG. **10D****,** in the case where the position of the agricultural machine **300** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the agricultural machine **300** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the agricultural machine **300,** control techniques such as PID control or MPC (Model Predictive Control) may be applied. Applying these control techniques will achieve smoothness of the control of bringing the agricultural machine **300** closer to the target path **P.**

Note that, when an obstacle is detected by one or more obstacle sensors **136** during travel, the controller **180** halts the agricultural machine **300.** Alternatively, when an obstacle is detected, the controller **180** may control the drive device **140** so as to avoid the obstacle. The controller **180** may also detect objects (e.g., other vehicles, pedestrians, etc.) that are located at relatively distant positions from the agricultural machine **300,** based on the sensor data which is output from the LiDAR sensor **156.** By performing speed control and steering control so as to avoid the detected objects, the controller **180** achieves self-traveling on public roads.

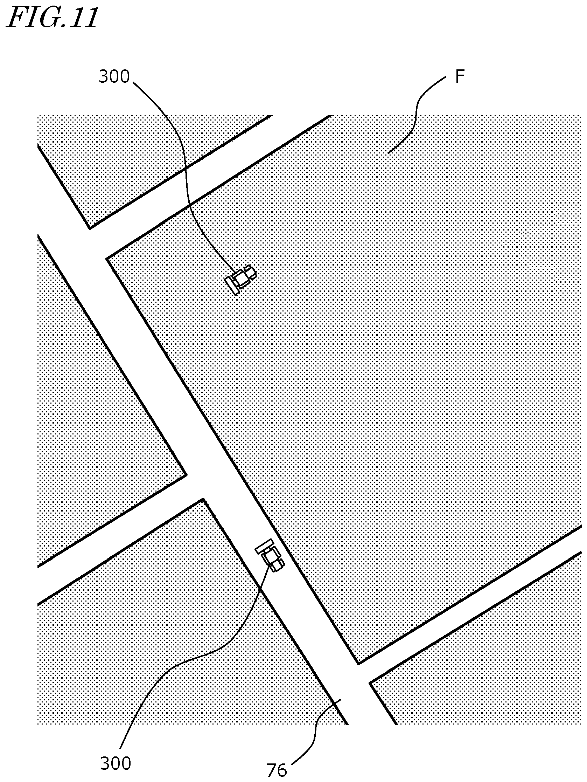

In the present embodiment, the agricultural machine **300** is able to automatically travel inside the field and outside the field in an unmanned manner. FIG. **11** is a diagram schematically showing an example situation where a plurality of agricultural machines **300** are self-traveling inside a field **F** and on a road **76** outside the field **F.** In the storage device **170,** an environment map of the inside of the field and the outside of the field including public roads and information of target paths is recorded. The environment map and target paths are generated by the ECU **185** of the controller **180,** for example. When the agricultural machine **300** travels on a public road, the agricultural machine **300** travels along a target path while sensing the surroundings by using sensing devices such as the cameras **155** and the LiDAR sensor **156,** with the implement **400** raised. During travel, the target path may be changed depending on the situation.

### [4. generation of task schedule]

An agricultural machine **300** according to the present embodiment automatically performs movement between fields and the agricultural task for each field, in accordance with a task schedule that is recorded in a storage device that is mounted on the agricultural machine **300.** The task schedule includes information on a plurality of agricultural tasks to be performed over a number of work days. Specifically, the task schedule may be a database that includes information indicating which agricultural task is to be performed by which agricultural machine at which point of time and in which field for each work day. Based on information that is input by the user by using the terminal apparatus **200,** the task schedule may be generated by the processor **21** of the server **100.** Hereinafter, an example method of generating the task schedule will be described.

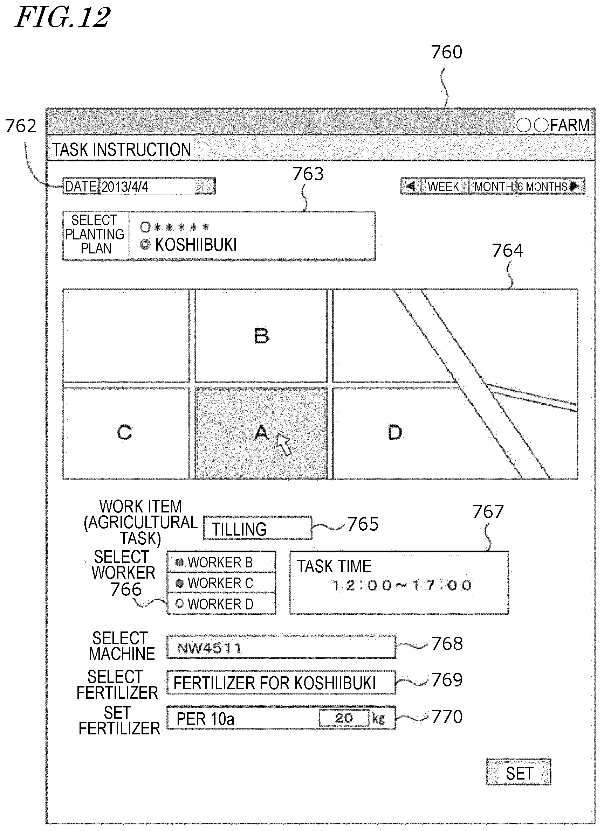

FIG. **12** is a diagram showing an example of a setting screen **760** that is displayed on the display device **220** of the terminal apparatus **200.** In accordance with the user's manipulation by using the input device **210,** the processor **230** of the terminal apparatus **200** activates an application for schedule generation to cause the setting screen **760** as shown in FIG. **12** on the display device **220.** On this setting screen **760,** the user is able to input information that is necessary for generating the task schedule.

FIG. **12** shows an example of the setting screen **760** in a case where tilling, including spreading of a fertilizer, is performed as an agricultural task in a field for rice cultivation. Without being limited to what is illustrated in the figure, the setting screen **760** may be modified as appropriate. The setting screen **760** in the example of FIG. **12** includes a date setting section **762,** a planting plan selecting section **763,** a field selecting section **764,** a task selecting section **765,** a worker selecting section **766,** a time setting section **767,** a machine selecting section **768,** a fertilizer selecting section **769,** and an application amount setting section **770.**

In the date setting section **762,** a date that has been input with the input device **210** is displayed. The input date is set as a date for performing the agricultural task.

In the planting plan selecting section **763,** a list of names of planting plans that was previously created is displayed. The user can select a desired planting plan from this list. The planting plan is previously generated for each kind or cultivar of crop, and recorded in the storage device **30** of the server **100.** The planting plan is a plan as to which crop is to be planted in which field. The planting plan is made by an administrator who manages the plurality of fields, etc., prior to planting a crop in a field. The field is a partitioned agricultural field in which crops are to be planted (i.e., grown). In the example of FIG. **4****,** a planting plan for "Koshiibuki", which is a cultivar of rice plant, is selected. In this case, the content to be set on the setting screen **760** is associated with the planting plan for "Koshiibuki".

In the field selecting section **764,** fields in the environment map are displayed. The user can select any field from among the displayed fields. In the example of FIG. **12****,** a portion indicating "field A" is selected. In this case, the selected "field A" is set as the field in which an agricultural task is to be performed.

In the task selecting section **765,** a plurality of agricultural tasks that are needed in order to cultivate the selected crop are displayed. The user can select one of the plurality of agricultural tasks. In the example of FIG. **12****,** "tilling" is selected from among the plurality of agricultural tasks. In this case, the selected "tilling" is set as the agricultural task to be performed.

In the worker selecting section **766,** previously-registered workers are displayed. The user can select one or more workers from among the plurality of displayed workers. In the example of FIG. **12****,** from among the plurality of workers, "worker B, worker C" are selected. In this case, the selected "worker B, worker C" are set as the workers to perform or manage the given agricultural task. In the present embodiment, because the agricultural machine automatically performs the agricultural task, the worker may not actually perform the agricultural task, but only remotely monitor the agricultural task being performed by the agricultural machine.

In the time setting section **767,** a task time that is input via the input device **210** is displayed. The task time is designated by a start time and an end time. The input task time is set as a scheduled time at which the agricultural task is to be performed.

The machine selecting section **768** is a portion for setting the agricultural machine to be used for the given agricultural task. In the machine selecting section **768,** for example, the IDs (identification information) and types or models of the agricultural machines which have been previously registered by the server **100,** types or models of usable implements, etc., may be displayed. The user can select a specific machine from among the indicated machines. In the example of FIG. **12****,** an implement model "NW4511" is selected. In this case, this implement is set as the machine to be used for the given agricultural task.

In the fertilizer selecting section **769,** names of a plurality of fertilizers which have been previously registered by the server **100** may be displayed. The user can select a specific fertilizer from among the indicated plurality of fertilizers. The selected fertilizer is set as the fertilizer to be used for the given agricultural task.

In the application amount setting section **770,** a numerical value that is input via the input device **210** is displayed. The input numerical value is set as an application amount.

Once a planting plan, a field, an agricultural task, a worker, a task time, a fertilizer, and an application amount are input in the setting screen **760** and "SET" is selected, the communicator **270** of the terminal apparatus **200** transmits the input information to the server **100.** The processor **21** of the server **100** stores the received information to the storage device **30.** Based on the received information, the processor **21** generates a schedule of agricultural tasks to be performed by each agricultural machine, and stores it to the storage device **30.**

Note that the information of agricultural tasks to be managed by the server **100** is not limited to what is described above. For example, an ability to set the kind and application amount of an agrochemical to be used for the field on the setting screen **760** may be provided. An ability to set information on agricultural tasks other than the agricultural task shown in FIG. **12** may be provided.

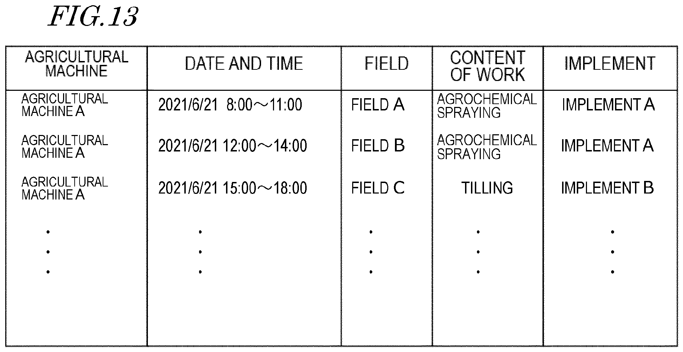

FIG. **13** is a diagram showing an example of a schedule of agricultural tasks to be generated by the server **100.** The schedule in this example includes, for each registered agricultural machine, information indicating the date and time at which the agricultural task is to be performed, the field, the contents of work, and the implement used. Other than the information shown in FIG. **13****,** depending on the contents of work, the schedule may include information on an agrochemical or the application amount of an agrochemical, etc., for example. In accordance with such a schedule, the processor **21** of the server **100** instructs the agricultural machine **300** as to an agricultural task. The schedule is downloaded by the controller of the agricultural machine **300,** and may be stored also to the storage device of the agricultural machine **300.** In that case, the controller of the agricultural machine **300** may spontaneously begin operation in accordance with the schedule stored in the storage device.

### [5. operation of agricultural assistance system]

### (5.1. overview of agricultural assistance method)

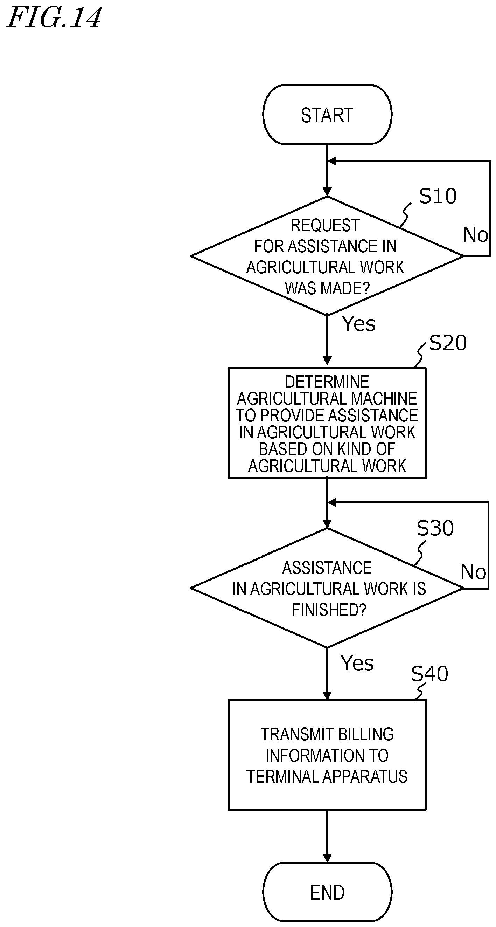

An agricultural assistance method according to the present embodiment is implemented in the controller **20** of the server **100.** FIG. **14** is a flowchart showing a procedure of an example agricultural assistance method according to the present embodiment. The agricultural assistance method includes: waiting for a request for assistance in agricultural work from the terminal apparatus **200** or the operational terminal **153** (step **S10**); determining an agricultural machine **300** to provide assistance in the agricultural work in accordance with the kind of agricultural work for the field needing assistance (step **S20**); waiting for completion of assistance in the agricultural work by the agricultural machine **300** (step **S3**0); and transmitting billing information to the terminal apparatus **200** or the operational terminal **153** (step **S40**) .

### (5.2. operation of controller)

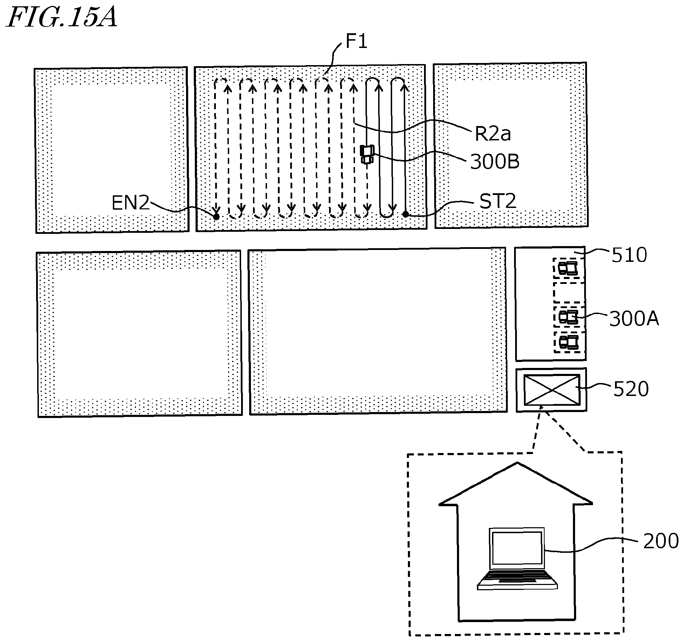

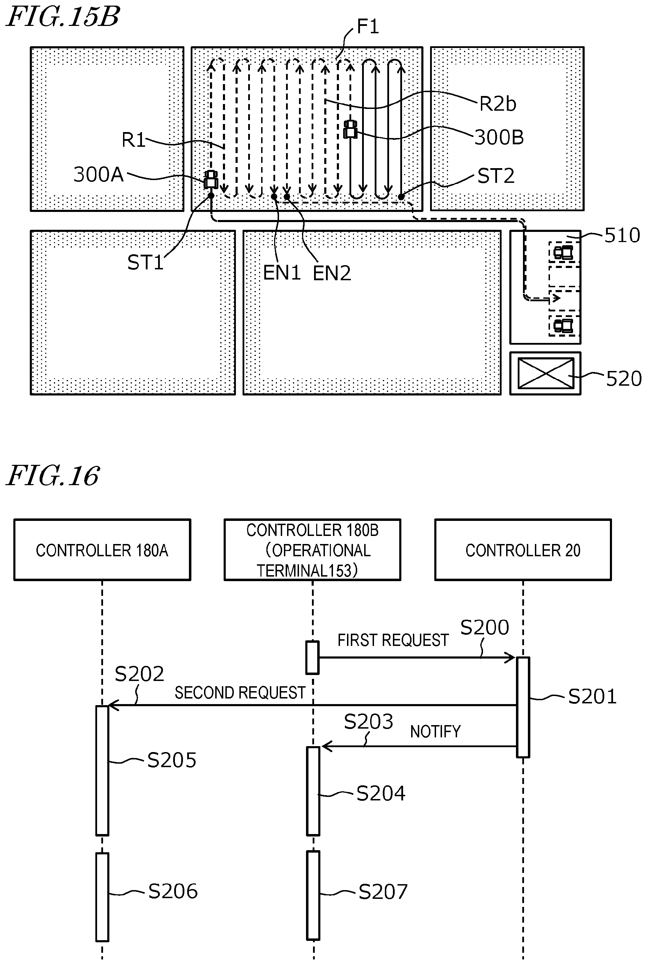

Next, with reference to FIGS. **15A** and **15B****,** an example operation of the server **100** (mainly the controller **20**) and the agricultural machine **300** will be described. One or more agricultural machines **300** that are connected to the agricultural assistance system **1000** described below include a first agricultural machine **300A** and a second agricultural machine **300B.** However, the one or more agricultural machines **300** may include three or more agricultural machines.

The first agricultural machine **300A** and the second agricultural machine **300B** according to the present embodiment refer to a task schedule that is transmitted from the server **100,** and move from a storage location to a field that is indicated in the task schedule, for example. The first agricultural machine **300A** and the second agricultural machine **300B** travel via self-driving on a road from the storage location to the field, and also automatically perform work within the field. Note that the first agricultural machine **300A** and the second agricultural machine **300B** may move via manual driving from the storage location to the field, and perform their work in the field via manual operation of the driver.

Each of FIGS. **15A** and **15B** is a diagram for describing an overview of assistance in the agricultural work for the field by the agricultural machine **300.** In each of FIGS. **15A** and **15B****,** a field map representing a field area that includes a plurality of fields including a field **F1,** a storage location **510,** and a management center **520** is illustrated. FIG. **15A** depicts a state where the first agricultural machine **300A** is stopped in the storage location **510.** FIG. **15B** depicts a state where the first agricultural machine **300A** is assisting in the work of the second agricultural machine **300B** in the field **F1.** The agricultural machines may be stored in a locked storage location. The storage location may be a barn at the owner's home of the agricultural machines, or a garage of an office of the farm manager, for example.

FIG. **15A** shows, with broken-line arrows, a target path **R2a** for the second agricultural machine **300B** to perform agricultural work in the field **F1.** FIG. **15B** shows target paths for the first agricultural machine **300A** and the second agricultural machine **300B** to work in cooperation in the field **F1.** More specifically, a target path **R1** for the first agricultural machine **300A** to perform agricultural work in the field **F1** upon receiving a request for assistance and a target path **R2b** for the second agricultural machine **300B** to continue its work in the field **F1** are both indicated with broken-line arrows. In FIGS. **15A** and **15B****,** any target path that has already been traveled is indicated by solid lines.

In the case where the first agricultural machine **300A** and the second agricultural machine **300B** each perform self-driving, a target path for moving to the field and/or a target path for performing agricultural work while moving within the field may be generated manually or automatically before self-driving is begun. Once the target path is determined, the first agricultural machine **300A** and the second agricultural machine **300B** each automatically travel along the target path. In a storage device that is included in the control system internal to the agricultural machine **300,** an environment map including the inside of the field and any public roads outside the field and information of target paths are previously recorded. In the case where the agricultural machine **300** travels along a public road, the agricultural machine **300** may travel along the target path while sensing the surroundings by using sensing devices such as the cameras and the LiDAR sensor, with the implement raised.

In the example shown in FIG. **15A****,** the second agricultural machine **300B** has moved from the storage location **510** to the field **F1,** and is performing agricultural work. The first agricultural machine **300A** and one or more other agricultural machines are stopped in the storage location **510,** ready to provide assistance in agricultural work for the field. The controller **180** of the first agricultural machine **300A** controls operation of the first agricultural machine **300A.** The controller **180** of the second agricultural machine **300B** controls operation of the second agricultural machine **300B.** Hereinafter, the controller **180** of the first agricultural machine **300A** and the controller **180** of the second agricultural machine **300B** will be respectively referred to as the "controller **180A**" and the "controller **180B**" for distinction. Moreover, a request signal that is transmitted from the operational terminal **153** or the terminal apparatus **200** to the controller **20** and a request signal that is transmitted from the controller **20** to the controller **180A** will be respectively referred to as a "first request signal" and a "second request signal" for distinction.

FIG. **16** is a diagram showing example operations of the controller **180A** of the first agricultural machine **300A,** the controller **180B** of the second agricultural machine **300B,** and the controller **20** of the server **100.** However, the respective operations according to the embodiment of the present disclosure are not limited to these.

### (step S200)

First, a first request signal is transmitted from the operational terminal **153** of the second agricultural machine **300B** to the controller **20.** The first request signal includes positional information of the second agricultural machine 300B, which has requested assistance in agricultural work.

### (step S201)

By referring to positional information of the second agricultural machine **300B** and an environment map that is stored in the storage device **30,** the controller **20** identifies the field **F1** in which the second agricultural machine **300B** is located. Moreover, by referring to the task schedule, the controller **20** determines an agricultural machine to provide work assistance from among one or more agricultural machines **300** which are stopped in the storage location **510,** for example.

For example, in response to receiving a first request signal from the operational terminal **153,** by referring to the environment map, the controller **20** identifies the position of the field **F1** from the positional information of the second agricultural machine **300B,** on which the operational terminal **153** having transmitted the first request signal is mounted. Moreover, by referring to the task schedule, the controller **20** determines an agricultural machine that is not performing any agricultural work when receiving the first request signal, e.g., the first agricultural machine **300A** stopped in the storage location **510,** as an agricultural machine to provide work assistance. From among a plurality of agricultural machines **300** stopped in the storage location **510,** for example, the controller **20** can determine an agricultural machine that is suited for the work for the field **F1** or an agricultural machine having attached thereto an implement that is suited to the work for the field **F1,** based on information included in the task schedule that is needed for assistance concerning the type of the agricultural machine or the item of agricultural work.

### (step S202)

In response to the first request signal, the controller **20** transmits to the controller **180A** a second request signal including a command for the first agricultural machine **300A** to move to the field **F1,** in which the second agricultural machine **300B** is located. For example, the controller **20** transmits a second request signal including the positional information of the field **F1** to the controller **180A** of the first agricultural machine **300A** being stopped in the storage location **510.**

### (step S203)

Upon determining an agricultural machine to provide work assistance, the controller **20** notifies the second agricultural machine **300B** that an agricultural machine to provide work assistance has been determined.

### (step S204)

The second agricultural machine **300B** is performing agricultural work while self-traveling within the field **F1** along the target path **R2a,** until the target path **R2a** is changed. Upon receiving the notification from the controller **20,** the controller **180B** changes the target path needed for the self-driving of the second agricultural machine **300B** in the field **F1.** Upon receiving the notification from the controller **20,** the controller **180B** changes the target path **R2a** in the field **F1** to the target path **R2b.**

As shown in FIG. **15A****,** before the first request signal is transmitted from the operational terminal **153** of the second agricultural machine **300B** to the controller **20,** the target path **R2a** of the second agricultural machine **300B** is set for the field **F1.** The target path **R2a** includes a start point **ST2** of beginning work, an end point **EN2** of ending work, and traveling directions as indicated by arrows in the figure. On the other hand, as shown in FIG. **15B****,** after receiving the notification from the controller **20,** the controller **180B** changes the target path **R2a** to the target path **R2b.** The controller **180B** sets a new end point **EN2** by moving the initially-conceived end point **EN2** included in the target path **R2a** to an arbitrary position on the target path **R2a** that is closer to the start point **ST2,** thereby generating the target path **R2b.** Stated otherwise, the controller **180B** generates the target path **R2b** by shortening the initially-conceived length (i.e., length from the start point **ST2** to the end point **EN2**) of the target path **R2a.**

### (step S205)

Upon receiving the second request signal, the controller **180A** begins a control for causing the first agricultural machine **300A** to move to the field **F1.** Upon receiving the second request signal from the controller **20,** the controller **180A** generates a target path **R1** for the first agricultural machine **300A** to perform agricultural work in the field **F1** needing assistance.

The controller **180A** may acquire the target path **R2a** of the second agricultural machine **300B** via the server **100,** and generate the target path **R1** by utilizing the target path **R2a.** The controller **180A** may generate the target path **R1** by setting the end point **EN2** of the target path **R2a** as the start point **ST1** of the target path **R1** and setting an arbitrary point on the target path **R2a** as the end point **EN1** of the target path **R1.** The controller **180A** also generates a target path for moving between the storage location **510** and the field **F1.**

### (step S206)

The controller **180A** causes the first agricultural machine **300A** to perform self-traveling along the target path **R1.** As the first agricultural machine **300A** arrives at the start point **ST1,** the controller **180A** activates the implement to cause the first agricultural machine **300A** to begin work from the start point **ST1.** By controlling the operation of the steering device **106** and the like, the controller **180A** causes the first agricultural machine **300A** to work while automatically traveling in traveling directions along the target path **R1.**

### (step S207)

The controller **180B** causes the second agricultural machine **300B** to perform self-traveling along the target path **R2b.** By controlling the operation of the steering device **106** and the like, the controller **180B** causes the second agricultural machine **300B** to work while automatically traveling in traveling directions along the target path **R2b.**

Thus, once generation of the target paths **R2b** and **R1** in the field **F1** is completed, the second agricultural machine **300B** performs work while self-driving along the target path **R2b,** and the first agricultural machine **300A** moves from the storage location **510** to the field **F1** and thereafter performs work while self-driving along the target path **R1.**

In the above-described example operation, it is via the server **100** that the controller **180A** receives the second request signal transmitted from the controller **20** in response to the first request signal transmitted from the operational terminal **153.** However, the controller **180A** may directly receive the first request signal from the operational terminal **153,** rather than via the server **100.** In this case, upon receiving the first request signal from the operational terminal **153,** by referring to the environment map, the controller **180A** may identify the position of the field **F1** from positional information of the second agricultural machine **300B,** on which the operational terminal **153** having transmitted the first request signal is mounted. Upon receiving the first request signal, the controller **180A** begins the control for causing the first agricultural machine **300A** to move to the field **F1.** Moreover, as mentioned above, the controller **180B** changes the target path needed for the self-driving of the second agricultural machine **300B** in the field **F1.**

In the above-described example operation, each of the controller **180A** and the controller **180B** generates a target path by itself after receiving the second request signal and the notification from the controller **20;** however, the present disclosure is not limited thereto. For example, after receiving the first request signal from the controller **180,** the controller **20** may generate target paths **R1** and **R2b** for the first agricultural machine **300A** and the second agricultural machine **300B,** and transmit the generated target paths **R1** and **R2b** to the controller **180A** and the controller **180B,** respectively. Moreover, the first request signal is illustrated as being transmitted from the operational terminal **153** mounted in the agricultural machine **300;** alternatively, the first request signal may be transmitted from the terminal apparatus **200** which is used by an administrator or the like.

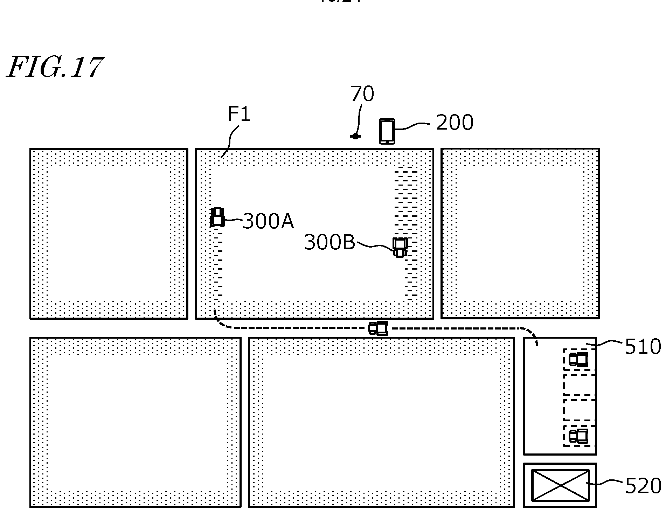

With reference to FIG. **17** to FIG. **20****,** an example of transmitting the first request signal from the terminal apparatus **200** will be described.

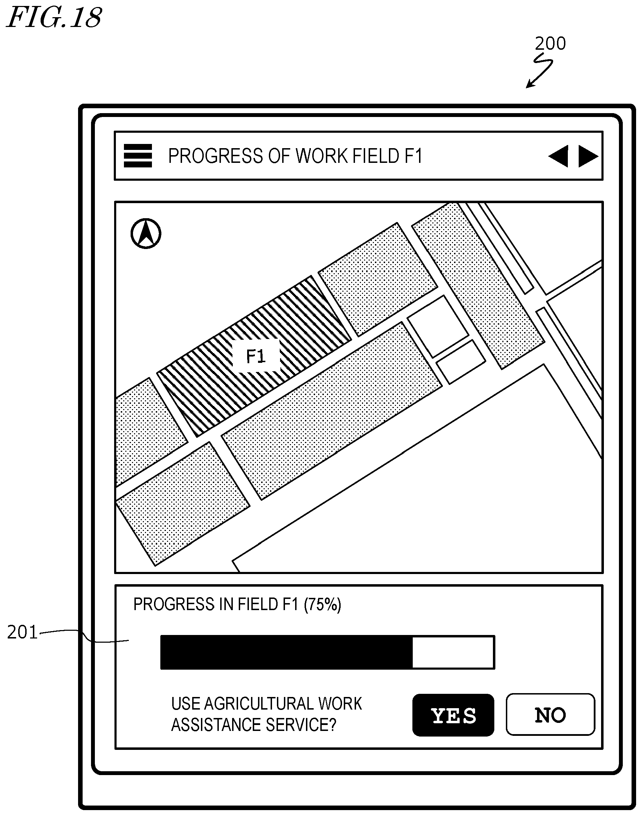

FIG. **17** is a diagram illustrating a state where an administrator **70** who is in the neighborhood of the field F1 is using the terminal apparatus **200** to manage the progress of work in the field **F1** that is performed by the second agricultural machine **300B.** FIG. **18** is a diagram showing an example indication of progress of work to be displayed on a display of the terminal apparatus **200.**

By using the terminal apparatus **200,** the administrator **70** may monitor the second agricultural machine **300B from** within the field **F1** or from the neighborhood of the field **F1.** When managing the progress of work of the second agricultural machine **300B,** the administrator **70** can easily confirm whether any delay in work has occurred or not from the progress of work indication displayed on the terminal apparatus **200,** for example.

The progress of work indication **201** in the example shown in FIG. **18** includes a bar chart that shows how the actual progress goes as compared to the initially-conceived task schedule in percentage (%). The indication **201** may include a choice indication section in which the user is allowed to choose to use the agricultural work assistance service, for example. In the illustrated example, if the administrator **70** chooses "YES", a first request signal is transmitted from the terminal apparatus **200** to the controller **20.** In response to the first request signal from the terminal apparatus **200,** the controller **20** transmits a second request signal indicating a request for assistance in the work of the second agricultural machine **300B** to the first agricultural machine **300A** being stopped in the storage location **510,** for example, and commands the first agricultural machine **300A** to move to the field **F1,** in which the second agricultural machine **300B** is located. In accordance with this command, the controller **180A** may cause the first agricultural machine **300A** to move to the field **F1.**

After the agricultural work for the field **F1** is finished, as positional information of a destination, the controller **20** transmits to the first agricultural machine **300A** the positional information of the original storage location **510,** and commands the first agricultural machine **300A** to return to the storage location **510.** In accordance with this command, the controller **180A** may cause the first agricultural machine **300A** to move to the storage location **510.**

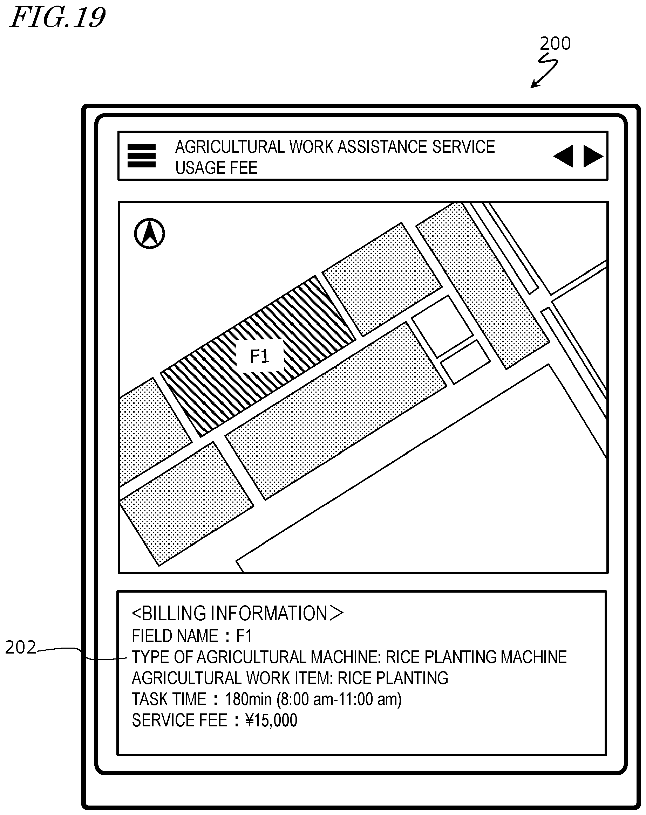

FIG. **19** is a diagram showing an example indication of a statement of usage to be displayed on the terminal apparatus **200** after the agricultural work assistance service is used. The controller **20** may generate a work log including at least one piece of information among contents of work, task time, and type of agricultural machine for the work assistance by the agricultural machine **300,** and record it to the storage device **30.** For example, in response to a request from administrator M1, the controller **20** may generate a work log including information among contents of work, task time, and type of agricultural machine for the agricultural work which was performed in the field **F1** by the first agricultural machine **300A** being possessed by administrator M2, who is distinct from administrator M1, and transmit data of the generated work log to the terminal apparatus **200** of administrator M1.

The controller **20** may calculate a rent for the agricultural machine **300** based on the work log, and transmit billing information that includes the rent to the terminal apparatus **200** of administrator M1. By displaying the billing information **202** illustrated in FIG. **18** on the terminal apparatus **200,** it is possible to urge administrator M1 to pay a usage fee for the agricultural work assistance service. The agricultural work assistance service may be a volume-based service in which the usage fee is calculated according to the task time and the type of agricultural machine, or a flat-rate service of subscription type. For example, by paying a fixed usage fee, the user is able to use the agricultural work assistance service for a certain period of time. As a result, an agricultural machine sharing service of subscription type may be realized, for example.

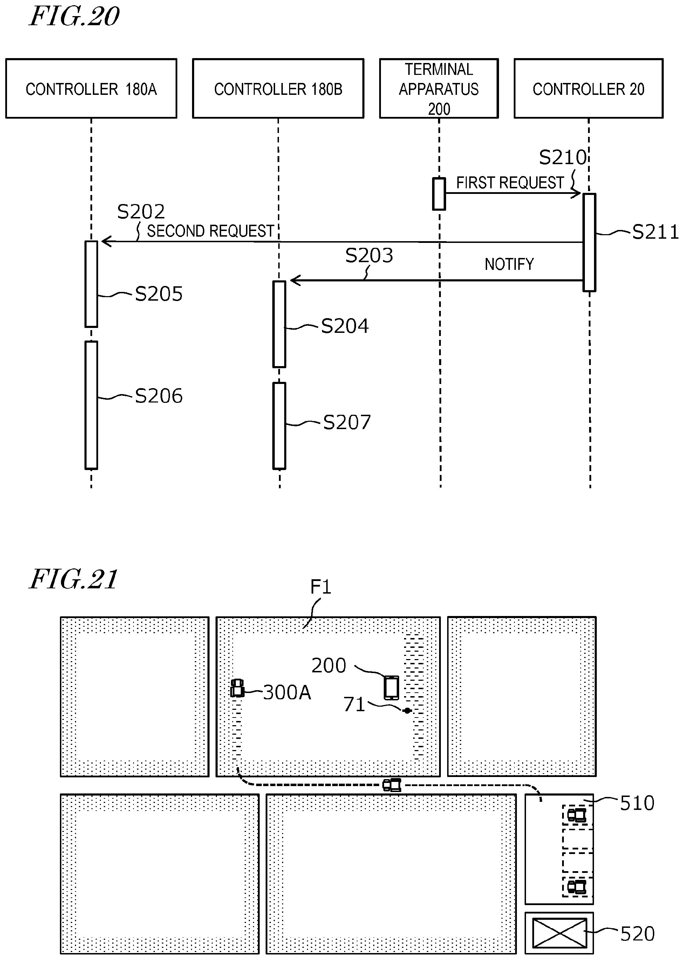

FIG. **20** is a diagram showing example operations of the controller **180A** of the first agricultural machine **300A,** the controller **180B** of the second agricultural machine **300B,** the terminal apparatus **200,** and the controller **20** of the server **100** where, in the case where assistance in the work of an agricultural machine is requested from the terminal apparatus **200** being used by the user. However, the respective operations according to the embodiment of the present disclosure are not limited to these. In FIG. **20****,** any process that is similar to a process shown in FIG. **16** is denoted by the same reference numeral, and the description thereof is omitted.

As shown in FIG. **20****,** a first request signal is transmitted from the terminal apparatus **200** to the controller **20** (step **S210**). The first request signal includes positional information of the field **F1** needing assistance, in which a user using the terminal apparatus **200** is located. By referring to the positional information of the field **F1** needing assistance and an environment map that is stored in the storage device **30,** the controller **20** identifies the field **F1** where the user is located. Moreover, by referring to the task schedule, the controller **20** determines the first agricultural machine **300A** stopped in the storage location **510,** for example, as an agricultural machine to provide work assistance (step **S211**) .

FIG. **21** is a diagram illustrating a state where an agricultural worker **71** is performing manual work in the field **F1** while carrying the terminal apparatus **200.** From the progress of work indication that is displayed by the terminal apparatus **200,** for example, the agricultural worker **71** can grasp the progress of work that is being performed by himself or herself. If the agricultural worker **71** desires assistance in the agricultural work, the agricultural worker **71** may use the terminal apparatus **200** to transmit to the controller **20** a first request signal requesting assistance in the agricultural work for the field **F1.** In response to the first request signal from the terminal apparatus **200,** the controller **20** transmits a second request signal indicating a request for assistance in the manual work which is being performed by the agricultural worker **71** in the field **F1,** to the first agricultural machine **300A** stopped in the storage location **510,** for example, and commands it to move to the field **F1** in which the agricultural worker **71** is working, for example. After the agricultural work in the field **F1** is finished, the controller **20** may transmit to the controller **180** a command indicating that the original storage location **510** is the destination. In accordance with this command, the controller **180A** may cause the first agricultural machine **300A** to move to the original storage location **510.**

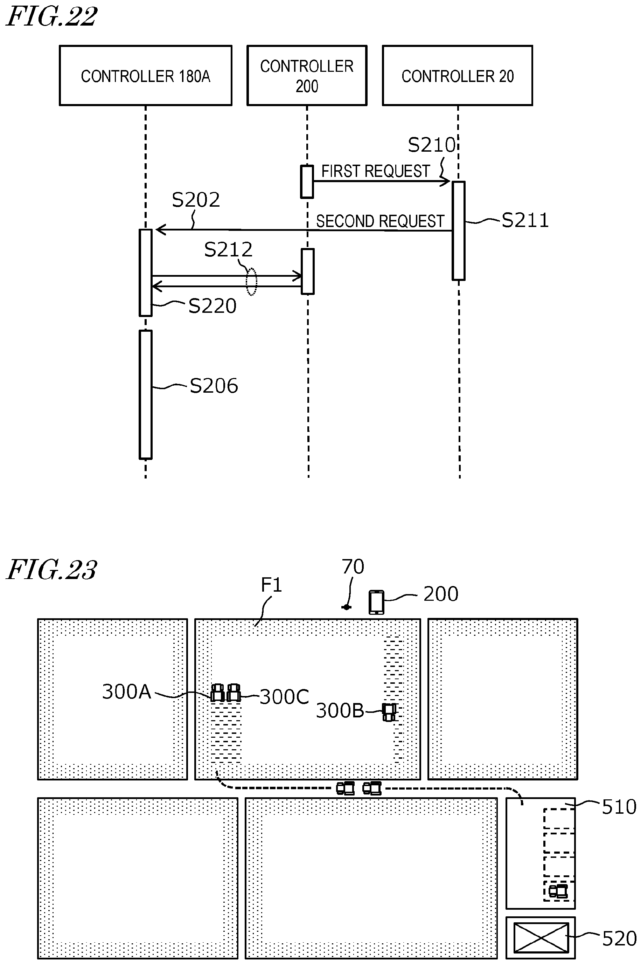

FIG. **22** is a diagram showing example operations of the controller **180A** of the first agricultural machine **300A,** the terminal apparatus **200,** and the controller **20** of the server **100** in a case where the worker requests assistance in work by using the terminal apparatus **200.** However, the respective operations according to the embodiment of the present disclosure are not limited to these. In FIG. **22****,** any process that is similar to a process shown in FIG. **20** is denoted by the same reference numeral, and the description thereof is omitted.

As shown in FIG. **22****,** through steps **S210** and **S211,** upon identifying the first agricultural machine **300A** the controller **20** transmits a second request signal to the controller **180A.** The second request signal in this case includes information indicating that there is no agricultural machine that is performing work in the field **F1** needing assistance, or information indicating that the request represents a request for assistance in the worker's manual work, for example.

As shown in FIG. **22****,** the controller **180A** may communicate with the terminal apparatus **200** (step **S212**) to acquire from the terminal apparatus **200** an unworked range where work is not being performed in the field **F1,** and generate a target path **R1** in the unworked range (step **S220**).

FIG. **23** is a diagram illustrating a state in which the administrator **70** being in the neighborhood of the field **F1** is using the terminal apparatus **200** to manage the progress of work in the field **F1** performed by the second agricultural machine **300B,** and in which the administrator **70** is receiving assistance in the agricultural work by one or more agricultural machines **300.**

In response to receiving a first request signal from the terminal apparatus **200,** the controller **20** in the present embodiment transmits a second request signal requesting the first agricultural machine **300A** and the third agricultural machine **300C,** which are able to move to the field **F1,** to assist in the work for the field **F1.** By performing agricultural work of the same content, the agricultural machines **300A** to **300C** can accelerate the work in the field **F1.**

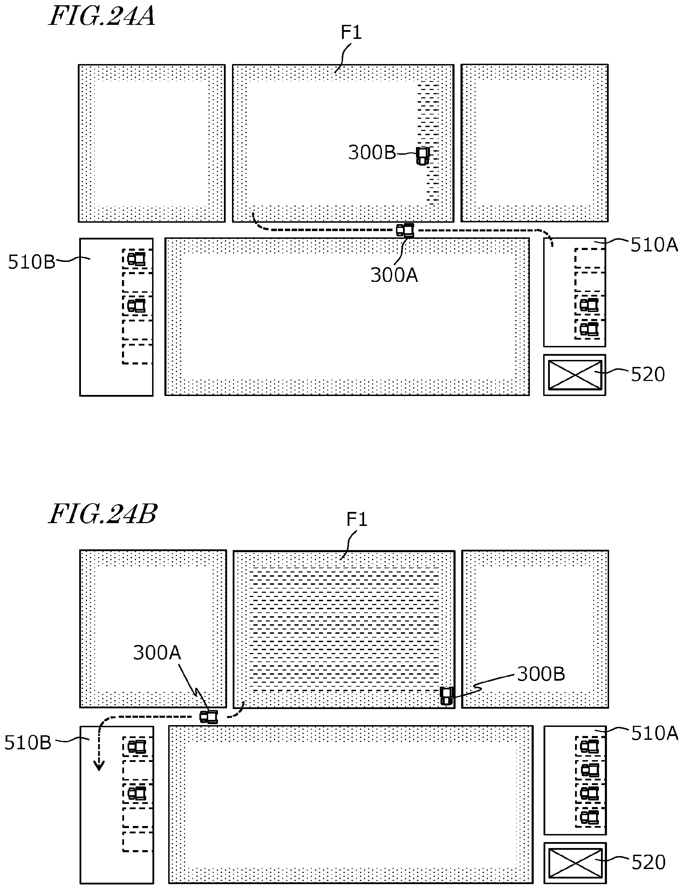

Each of FIGS. **24A** and **24B** is a diagram for describing an example where, after agricultural work for the field **F1** is finished, the first agricultural machine **300A** is moved to a storage location that is distinct from the storage location in which the first agricultural machine **300A** was stopped. In each of FIGS. **24A** and **24B****,** a field map representing a field area that includes a plurality of fields including the field **F1,** a first storage location **510A,** a second storage location **510B,** and a management center **520** is illustrated. The first and second storage locations **510A** and **510B** in the present embodiment may be possessed by respectively different administrators. For example, in a case where administrator M1 makes a request for assistance in agricultural work, administrator M2 may possess the first storage location **510A,** and administrator M3 may possess the second storage location **510B.**

In response to receiving a first request signal from the terminal apparatus **200,** the controller **20** transmits a second request signal requesting assistance in the field **F1** to the first agricultural machine **300A** being stopped in the first storage location **510A.** As illustrated in FIG. **24B****,** when the first agricultural machine **300** finishes work in the field **F1,** if the original storage location **510A** is full of other agricultural machines **300** such that there is no storing space left, the controller **20** may transmit to the controller **180A** a command indicating the second storage location **510B,** in which some storing space remains, as a destination for the first agricultural machine **300A.**

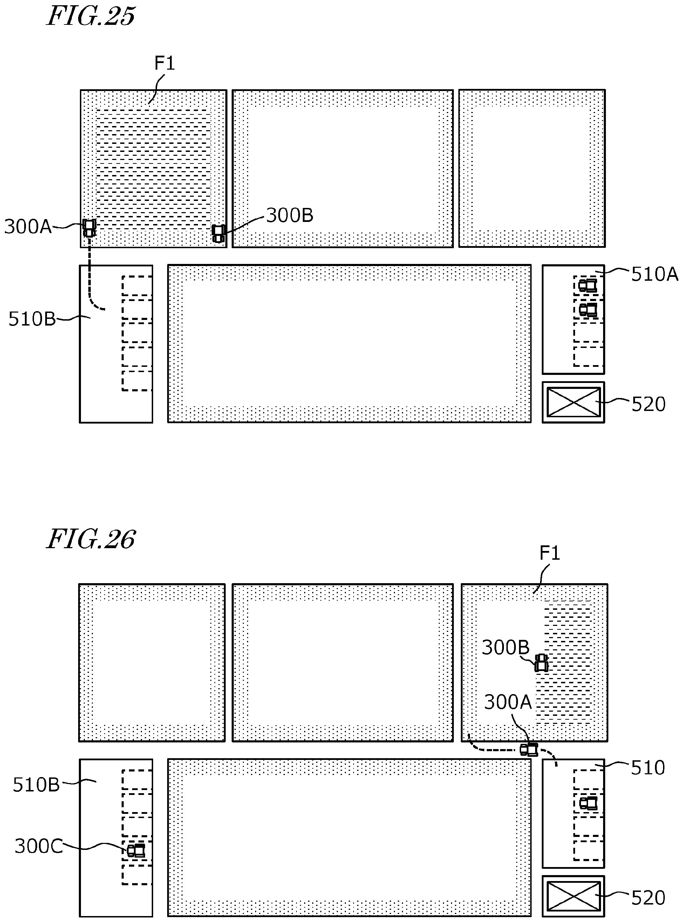

FIG. **25** is a diagram showing another example where, after agricultural work for the field **F1** is finished, the first agricultural machine **300A** is moved to a storage location that is distinct from the storage location in which the first agricultural machine **300A** was stopped.

In response to receiving a first request signal from the terminal apparatus **200,** the controller **20** may transmit to the controller **180A** a second request signal to cause the first agricultural machine **300A** being stopped in the first storage location **510A** to move to the field **F1.** After the agricultural work in the field **F1** is finished, the first agricultural machine **300A** may move to the second storage location **510B.** In this example, the distance from the field **F1** to the second storage location **510B** is shorter than the distance from the field **F1** to the first storage location **510A.** When the first agricultural machine **300** has finished work in the field **F1,** if there is any storing space left in the second storage location **510B,** the controller **20** may cause the first agricultural machine **300** to move to the second storage location **510B.** Under such control, the time needed for the agricultural machine **300** to return to the storage location can be reduced.

For each field, the storage device **30** of the server **100** may previously store data of plot polygons having spatial information representing its position on the globe (i.e., geographic coordinates) and its shape as well as attribute information. "Plot polygons" are plot information of a field that is generated from plot to plot based on aerial photographs or satellite images, etc., so as to follow the shape of the field. "Geographic coordinates" mean a position in a geographic coordinate system that expresses any position on the globe in terms of latitude and longitude, or in a projected coordinate system obtained by projecting three-dimensional coordinates on the globe onto a two-dimensional plane and expressing any position on the globe in terms of XY coordinates. For example, based on plot polygons, the controller **20** may determine the coordinates in the geographic coordinate system of each vertex defining the shape of a field region or a storage location, and calculate the barycentric coordinates of the shape of a field region or a storage location based on the determined coordinates. The controller **20** can calculate a distance from a field to another field, or a distance from a field to a storage location, as a Euclidean distance or a Manhattan distance between two barycentric coordinate points, for example.

The controller **20** according to the present embodiment may transmit a second request signal, as an instruction of a movement to the field **F1,** to the first agricultural machine **300A** or the third agricultural machine **300C** as was determined based on the relative positioning, at the time when a first request signal is received, between: the place where the first agricultural machine **300A** is located; the place where the third agricultural machine **300C** is located; and the field **F1.**

FIG. **26** is a diagram for describing an example where, in a case where the first storage location **510A** is closer to the field **F1** than is the second storage location **510B,** the agricultural machine **300** at the first storage location **510A** is moved to the field **F1.**

In this example, one or more agricultural machines **300** are stopped in each of the first storage location **510A** and the second storage location **510B.** The distance from the field **F1** to the second storage location **510B** is longer than the distance from the field **F1** to the first storage location **510A.** In this case, when the first agricultural machine **300A** is stopped in the first storage location **510A** and the third agricultural machine **300C** is stopped in the second storage location **510B,** in response to receiving a first request signal from the terminal apparatus **200,** the controller **20** may determine the first agricultural machine **300A** as an agricultural machine to be moved to the field **F1** needing assistance.

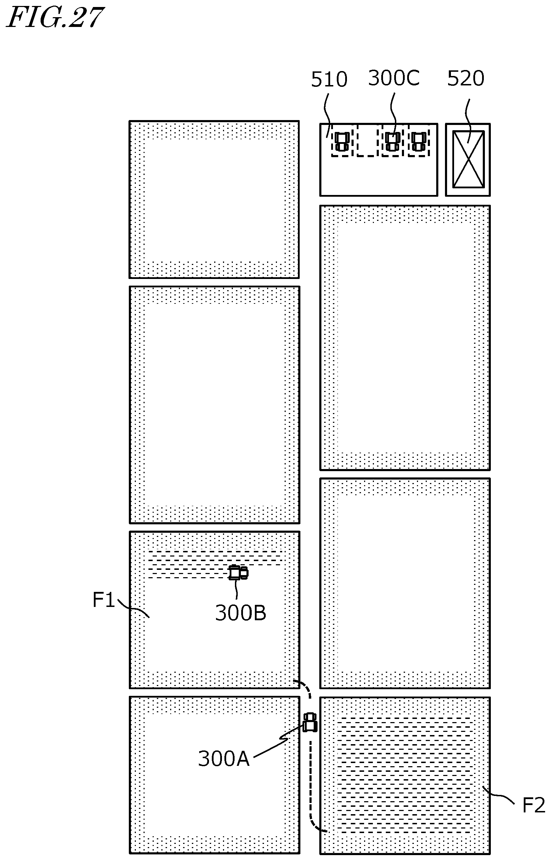

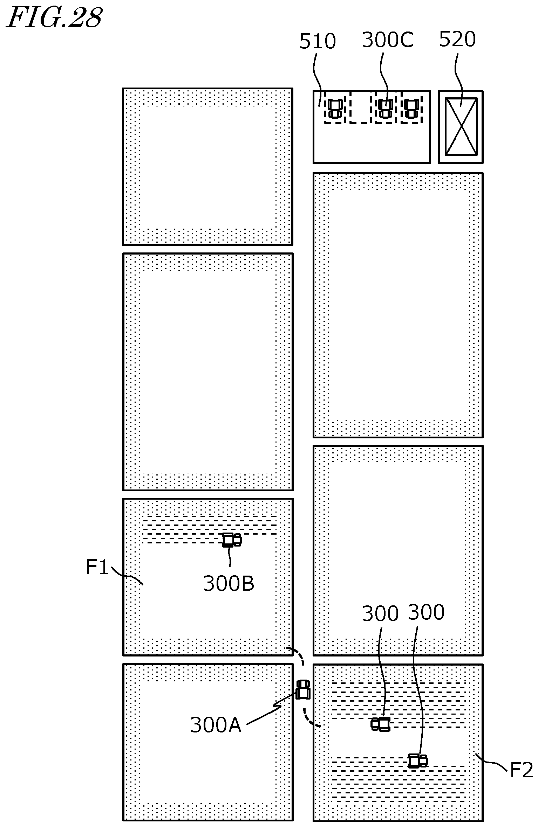

Each of FIG. **27** and FIG. **28** is a diagram for describing an example where, in a case where another field **F2** is closer to the field **F1** than is the storage location **510,** an agricultural machine **300** performing agricultural work in the field **F2** is moved to the field **F1.**

In this example, the distance from the field **F1** to the field **F2** is shorter than the distance from the field **F1** to the storage location **510.** In this case, when the third agricultural machine **300C** is stopped in the storage location **510** and the first agricultural machine **300A** is performing agricultural work in the field **F2,** in response to receiving a first request signal from the terminal apparatus **200,** the controller **20** may determine the first agricultural machine **300A** as an agricultural machine to be moved to the field **F1** needing assistance.

After the first agricultural machine **300A** has finished work in the field **F1,** the controller **20** commands the controller **180A** to move the first agricultural machine **300A** from the field **F2** to the field **F1.** In accordance with this command, the controller **180A** causes the first agricultural machine **300A** to move to the field **F1.** The control in this example is effective in the case where, as compared to causing an agricultural machine that is stopped in a storage location to move to the field, it is a quicker way of beginning assistance in the agricultural work to cause an agricultural machine that is about to finish work in another field to move to the field after finishing work; or where it is a quicker way of beginning assistance in the agricultural work to cause an agricultural machine that has finished work earlier than is scheduled to move to the field, etc., for example.

As is illustrated in FIG. **28****,** if one or more agricultural machines **300** are performing work in the field **F1** other than the first agricultural machine **300A,** the controller **20** may not need to wait for the work in the field **F1** to be finished in causing the first agricultural machine **300A** to move to the field **F1.** The controller **20** may allow the agricultural machine(s) **300** other than the first agricultural machine **300A** to continue work in the field **F1.**

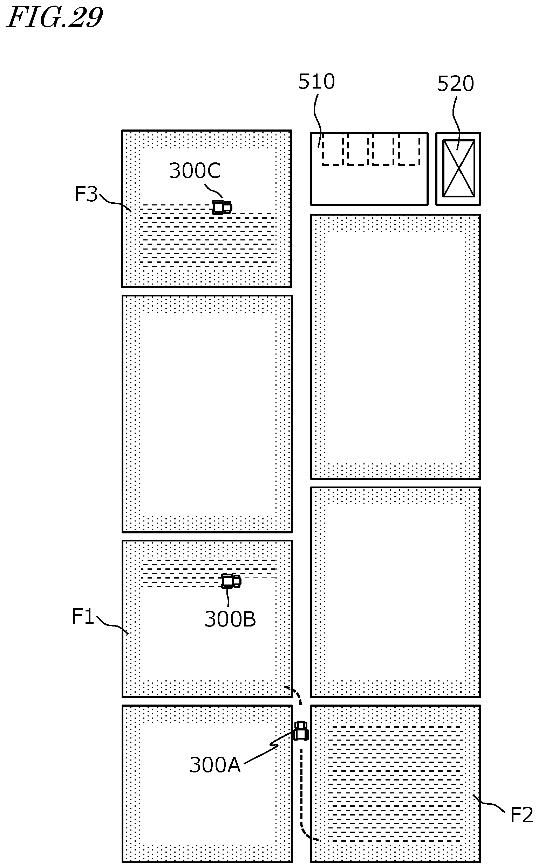

FIG. **29** is a diagram for describing an example where, in a case where the field **F2** is closer to the field **F1** than is a field **F3,** an agricultural machine **300** performing agricultural work in the field **F2** is moved to the field **F1.**

In this example, there is no agricultural machine **300** that is stopped in the storage location **510.** The distance from the field **F3** to the field **F1** is longer than the distance from the field **F1** to the field **F2.** In this case, when the first agricultural machine **300A** is performing agricultural work in the field **F2** and the third agricultural machine **300C** is performing agricultural work in the field **F3,** in response to receiving a first request signal from the terminal apparatus **200,** the controller **20** commands the controller **180A** to move the first agricultural machine **300A** from the field **F2** to the field **F1.** In accordance with this command, the controller **180** causes the first agricultural machine **300A** to move to the field **F1.** Preferably, the controller **20** designates the field **F1** to be the destination of the first agricultural machine **300A** after the first agricultural machine **300A** has finished work in the field **F2.** The control in this example is effective in the case where all agricultural machines that were stopped in a storage location have gone out in response to requests for assistance in agricultural work.

In the aforementioned examples, when a request for assistance is made from the terminal apparatus or the operational terminal, the controller mounted in the agricultural machine performs self-driving control for causing one or more agricultural machines to move to a field. Alternatively, however, the controller of the server may perform self-driving control for causing one or more agricultural machines to move to a field when a request for assistance is made from the terminal apparatus or the operational terminal. In this case, through remote manipulations at the server, self-driving of the agricultural machine may be achieved.

A system that provides various functions according to embodiments can be mounted on an agricultural machine lacking such functions as an add-on. Such a system may be manufactured and sold independently from the agricultural machine. A computer program for use in such a system may also be manufactured and sold independently from the agricultural machine. The computer program may be provided in a form stored in a computer-readable, non-transitory storage medium, for example. The computer program may also be provided through downloading via telecommunication lines (e.g., the Internet).

### INDUSTRIAL APPLICABILITY

A system that provides various functions according to embodiments can be mounted on an agricultural machine lacking such functions as an add-on. Such a system may be manufactured and sold independently from the agricultural machine. A computer program for use in such a system may also be manufactured and sold independently from the agricultural machine. The computer program may be provided in a form stored in a computer-readable, non-transitory storage medium, for example. The computer program may also be provided through downloading via telecommunication lines (e.g., the Internet).

### REFERENCE SIGNS LIST

**10:** communicator; **20:** controller; **21:** processor; **22, 240:** ROM; **23, 250:** RAM; **30, 170, 260:** storage device; **60:** network; **70:** administrator; **71:** agricultural worker; **100:** server computer; **100:** server; **101:** vehicle body; **102:** prime mover; **103:** transmission; **104:** tire; **105:** cabin; **106:** steering device; **107:** driver's seat; **108:** linkage device; **130:** positioning device; **131:** GNSS receiver; **135:** inertial measurement unit; **136:** obstacle sensor; **140:** drive device; **150:** steering wheel sensor; **151:** angle-of-turn sensor; **152:** wheel axis sensor; **153:** operational terminal; **154:** operation switches; **155:** camera; **156:** LiDAR sensor; **160:** control system; **180:** controller; **181** to **185:** electronic control unit (ECU); **200:** terminal apparatus; **210:** input device; **220:** display device; **230:** processor; **270:** communicator; **300:** agricultural machine; **300A:** first agricultural machine; **300B:** second agricultural machine; **300C:** third agricultural machine; **400:** implement; **510:** storage location; **520:** management center; **1000:** management system; **F1** to **F3:** field

## Claims

1. An agricultural assistance system to assist with agricultural work with one or more agricultural machines,
the agricultural assistance system comprising a controller to control an operation of the one or more agricultural machines, wherein,
in response to receiving from a terminal apparatus a signal requesting assistance in agricultural work for a field, the controller causes the one or more agricultural machines to move to the field to assist in the agricultural work for the field.

2. The agricultural assistance system of claim 1, wherein the controller
controls an operation of a first agricultural machine among the one or more agricultural machines, and,
while a second agricultural machine is performing agricultural work in the field, in response to receiving the signal from the terminal apparatus, causes the first agricultural machine to move to the field to assist in the agricultural work performed by the second agricultural machine.

3. The agricultural assistance system of claim 1, wherein the controller
controls an operation of each of a first agricultural machine and a second agricultural machine among the one or more agricultural machines, and,
in response to receiving the signal from the terminal apparatus, causes the first agricultural machine and the second agricultural machine to move to the field to assist in the agricultural work for the field.

4. The agricultural assistance system of claim 2, wherein, in response to receiving the signal from the terminal apparatus, the controller causes the first agricultural machine being stopped in a storage location to move to the field, and after the agricultural work for the field is finished, causes the first agricultural machine to move to the storage location.

5. The agricultural assistance system of claim 2, wherein, in response to receiving the signal from the terminal apparatus, the controller causes the first agricultural machine being stopped in a first storage location to move to the field, and after the agricultural work for the field is finished, causes the first agricultural machine to move to a second storage location that is distinct from the first storage location.

6. The agricultural assistance system of claim 5, wherein, in response to receiving the signal from the terminal apparatus, the controller causes the first agricultural machine being stopped in the first storage location to move to the field, and after the agricultural work for the field is finished, causes the first agricultural machine to move to the second storage location being at a shorter distance from the field than a distance from the field to the first storage location.

7. The agricultural assistance system of claim 2, wherein the controller
controls an operation of a third agricultural machine among the one or more agricultural machines; and
the controller causes the first or third agricultural machine to move to the field based on a relative positioning, at a time when the signal is received from the terminal apparatus, between: a place where the first agricultural machine is located; a place where the third agricultural machine is located; and the field.

8. The agricultural assistance system of claim 7, wherein, when the first agricultural machine is stopped in a first storage location and the third agricultural machine is stopped in a second storage location that is located at a distance from the field that is greater than a distance from the field to the first storage location, in response to receiving the signal from the terminal apparatus, the controller causes the first agricultural machine to move from the first storage location to the field.

9. The agricultural assistance system of claim 7, wherein when the third agricultural machine is stopped in a first storage location and the first agricultural machine is performing agricultural work in another field that is located at a distance from the field that is less than a distance from the field to the first storage location, in response to receiving the signal from the terminal apparatus, the controller causes the first agricultural machine to move from the other field to the field.

10. The agricultural assistance system of claim 7, wherein, when the first agricultural machine is performing agricultural work in another field that is distinct from the field and the third agricultural machine is performing agricultural work in still another field that is located at a distance from the field that is greater than a distance from the field to the other field, in response to receiving the signal from the terminal apparatus, the controller causes the first agricultural machine to move from the other field to the field.

11. The agricultural assistance system of any of claims 1 to 10, comprising a storage device, wherein,
the controller generates a work log including at least one piece of information among contents of work, a task time, and a type of agricultural machine for the agricultural work performed by the one or more agricultural machines in the field, and records the work log in the storage device.

12. The agricultural assistance system of claim 11, wherein the controller transmits data of the work log to the terminal apparatus.

13. The agricultural assistance system of claim 11 or 12, wherein the controller calculates a rent for the one or more agricultural machines based on the work log, and transmits billing information to the terminal apparatus.

14. The agricultural assistance system of any of claims 1 to 13, wherein the controller manages a schedule of agricultural work to be performed by the one or more agricultural machines.

15. The agricultural assistance system of claim 14, wherein, when the controller determines that the one or more agricultural machines are to move to the field in response to receiving the signal from the terminal apparatus, the controller updates a schedule of agricultural work to be performed by the one or more agricultural machines.

16. An agricultural assistance system to assist with agricultural work with an agricultural machine,
the agricultural assistance system comprising a controller to control an operation of each of a first agricultural machine and a second agricultural machine, wherein
the controller
manages a schedule of agricultural work to be performed by the second agricultural machine, and,
while the second agricultural machine is performing agricultural work for the field, if it is determined that the agricultural work by the second agricultural machine is behind the schedule, causes the first agricultural machine to move to the field to assist in the agricultural work performed by the second agricultural machine.

17. A computer-implemented agricultural assistance method to assist with agricultural work with one or more agricultural machines, the agricultural assistance method causing a computer to execute:
controlling an operation of the one or more agricultural machines;
receiving a signal requesting assistance in agricultural work for a field that is transmitted from a terminal apparatus; and,
when receiving the signal, causing the one or more agricultural machines to move to the field to assist in the agricultural work for the field.

18. A computer-implemented agricultural assistance method to assist with agricultural work with an agricultural machine, the agricultural assistance method causing a computer to execute:
controlling an operation of each of a first agricultural machine and a second agricultural machine;
managing a schedule of agricultural work to be performed by the second agricultural machine; and
while the second agricultural machine is performing agricultural work for the field, if it is determined that the agricultural work by the second agricultural machine is behind the schedule, causing the first agricultural machine to move to the field to assist in the agricultural work performed by the second agricultural machine.
